# DEMANDE DE BREVET EUROPEEN

(11) **EP 3 840 164 A1**
(43) Date de publication de la demande: **23.06.2021**
(21) Numéro de dépôt: 20213980.4
(22) Date de dépôt: 15.12.2020
(51) Int. Cl.: H02J 3/38, H02J 3/32

(54) **PROCÉDÉ ET DISPOSITIF DE PILOTAGE D'UN ENSEMBLE DE PRODUCTION D'ÉLECTRICITÉ, ET ENSEMBLE DE PRODUCTION ASSOCIÉ**

(30) Priorité: 16.12.2019 FR 1914499
(71) Demandeur: Commissariat à l'Energie Atomique et aux Energies Alternatives, 75015 Paris (FR)
(72) Inventeur: AL SHAKARCHI, Franck, 38054 GRENOBLE CEDEX 09 (FR); BOURRY, Franck, 38054 GRENOBLE CEDEX 09 (FR); WANTIER, Audrey, 38054 GRENOBLE CEDEX 09 (FR)
(74) Mandataire: Cabinet Camus Lebkiri

(57) **Abrégé**

L'invention concerne notamment un procédé de pilotage d'un ensemble de production d'électricité comprenant : un système de production d'électricité, qui génère une puissance produite (P_{prod}), ainsi qu'un système de stockage d'électricité.

L'ensemble de production est piloté, à chaque pas de temps, de manière à délivrer une puissance totale (Pₒᵤₜ) qui soit inférieure à une puissance maximale acceptable (P_{H}). La puissance maximale acceptable est déterminée de sorte que l'ensemble de production puisse, en partant de cette puissance, et compte tenu d'une énergie stockée (E_{stock}) dans le système de stockage au pas de temps (tᵢ) considéré, rejoindre ensuite progressivement, avec une pente (Sₘᵢₙ) modérée, une puissance minimale prévue (P_{prod,min}), qui est représentative de la pire variation à la baisse attendue pour la puissance produite en cas de dégradations de conditions météorologiques.

## Description

### DOMAINE TECHNIQUE DE L'INVENTION

L'invention concerne un procédé et un dispositif de pilotage d'un ensemble de production d'électricité dans lequel une puissance électrique produite dépend de conditions météorologiques environnantes, et peut donc fluctuer de manière faiblement prédictible.

### ARRIERE-PLAN TECHNOLOGIQUE DE L'INVENTION

Les systèmes de production d'électricité basés sur des énergies renouvelables, de type photovoltaïques ou éoliens, sont de plus en plus répandus. Mais la puissance électrique produite par de tels systèmes peut varier de manière importante et faiblement prédictible sous l'effet de variations de conditions météorologiques environnantes.

A titre d'exemple, lorsqu'un nuage vient s'interposer entre le soleil et un champ de panneaux photovoltaïques, la puissance électrique produite par cette installation peut chuter très rapidement, avec un taux de variation de 50% par minute, voire de 80% par minute. Gérer un tel taux de variation s'avère particulièrement problématique pour un réseau de distribution d'électricité raccordé à ce champ de panneaux photovoltaïques.

C'est pour cela que la plupart des organismes de gestion de réseaux de distribution d'électricité imposent aux systèmes de production raccordés au réseau de fournir une puissance électrique dont le taux de variation reste inférieur à une limite donnée, par exemple inférieur à quelques pourcents par minute (typiquement 5 ou 10% par minute, au maximum).

Pour atténuer les variations de la puissance électrique produite, causées par les variations de conditions météorologiques, il est connu d'associer un système de stockage d'énergie électrique au système de production. Le système de stockage peut par exemple être réalisé sous la forme d'un ensemble de batteries électriques, ou sous la forme d'un système hydroélectrique permettant de stocker de l'énergie en pompant de l'eau vers un réservoir situé en hauteur.

En cas de chute brutale de la puissance électrique produite par le système de production, le système de stockage délivre alors une puissance électrique complémentaire qui s'ajoute à la puissance produite, ce qui permet d'atténuer les variations (à la baisse) de la puissance électrique totale délivrée au réseau de distribution.

De même, en cas d'augmentation soudaine de la puissance produite, une partie de cette puissance est absorbée par le système stockage, pour limiter l'augmentation de la puissance électrique totale délivrée au réseau de distribution.

Le document CN101841163, par exemple, décrit une méthode de pilotage d'un ensemble de production d'électricité comprenant un ensemble d'éoliennes, un ensemble de panneaux photovoltaïques et un ensemble de batteries électriques. Cet ensemble de production alimente un réseau de distribution. Lorsqu'un dispositif de détection détecte que la puissance électrique totale, produite par les éoliennes et panneaux photovoltaïques, est inférieure à une plage de fluctuation de puissance permise par le réseau de distribution, alors, l'ensemble de batteries est piloté de manière à délivrer de l'électricité. Inversement, lorsqu'il est détecté que la puissance totale produite est supérieure à cette plage de fluctuation, l'ensemble de batteries est piloté de manière à stocker de l'énergie.

Cette méthode de pilotage permet de remédier en partie à une chute ponctuelle de la puissance totale produite, due par exemple au passage d'un nuage au-dessus des panneaux photovoltaïques.

Mais en cas de baisse prolongée de la puissance produite, par exemple si le ciel se couvre durablement de nuages, les batteries électriques vont finir par se vider complètement et la puissance électrique délivrée au réseau de distribution risque finalement de chuter brutalement.

Pour pallier à ce problème, une solution pourrait consister à augmenter considérablement les capacités de stockage de l'ensemble de batteries électriques. Mais une telle solution est couteuse et a un impact environnemental (écologique) important.

Dans ce contexte, il existe donc un besoin d'un procédé ou d'un dispositif de pilotage qui permette de piloter un ensemble de production d'électricité, en limitant les fluctuations de la puissance électrique totale délivrée par cet ensemble même si le système de stockage de cet ensemble de production a une capacité de stockage limitée.

### RESUME DE L'INVENTION

Pour résoudre au moins en partie le problème mentionné ci-dessus, on propose un procédé de pilotage d'un ensemble de production d'électricité qui délivre une puissance délivrée à un réseau de distribution d'électricité,
- l'ensemble de production d'électricité comprenant au moins :
   - un système de production d'électricité qui génère une puissance produite dépendant de conditions météorologiques environnantes, pour lequel il est estimé que la puissance produite est au moins égale à une puissance minimale prévue même en cas de fluctuation à la baisse due à des variations de conditions météorologiques, et
   - un système de stockage d'énergie électrique, dans lequel une énergie stockée, disponible, est emmagasinée,
- le procédé comprenant les étapes suivantes, exécutées à nouveau à chaque pas de temps par un dispositif de pilotage comprenant au moins un processeur et une mémoire :
   - détermination d'une puissance maximale acceptable pour le pas de temps suivant,
   - détermination d'une puissance cible pour l'ensemble de production, la puissance cible étant déterminée de manière à être inférieure à la puissance maximale acceptable,
   - pilotage de l'ensemble de production de sorte que la puissance délivrée au pas de temps suivant soit égale à la puissance cible.

L'étape de détermination de la puissance maximale acceptable comprend une étape de validation, au cours de laquelle il est testé si la puissance maximale acceptable satisfait le critère suivant :
- si l'ensemble de production délivre ladite puissance maximale acceptable au pas de temps suivant, et si la puissance produite, générée par le système de production, devient égale à ladite puissance minimale prévue à partir du pas de temps suivant,
- alors, compte tenu de l'énergie stockée dans le système de stockage au pas de temps considéré, l'ensemble de production pourra délivrer ultérieurement une puissance délivrée qui, au cours du temps, rejoint progressivement ladite puissance minimale prévue, tout en variant avec une pente qui reste comprise entre une pente minimale autorisée et une pente maximale autorisée.

L'étape de validation comprend une détermination par simulation numérique de la puissance (totale) qui serait délivrée ultérieurement, au cours du temps, par l'ensemble de production, ladite simulation comprenant une détermination d'une puissance de stockage délivrée par (ou emmagasinée dans) le système de stockage au cours du temps, la puissance de stockage étant déterminée sur la base d'un modèle de comportement électrique ou énergétique du système de stockage.

On comprend bien que, si la puissance délivrée est pilotée à une valeur très élevée au pas suivant, alors que l'énergie stockée est réduite, il se pourrait, en cas de dégradation des conditions météorologiques, que la puissance délivrée ultérieurement chute brutalement, avec un taux de variation trop élevé, sans qu'il soit possible de modérer cette chute par un apport complémentaire du système de stockage.

C'est pourquoi on vérifie ici, lors de l'étape de validation, qu'il sera possible, compte tenu de l'énergie stockée dans le système de stockage, de rejoindre, avec une pente modérée, une sorte de courbe de sécurité correspondant à la puissance minimale prévue, au cas où les conditions météorologiques se dégraderaient soudainement et durablement.

La puissance maximale acceptable peut par exemple être déterminée de manière à être la plus grande puissance, qui, si elle était délivrée au pas temps suivant, permettrait de satisfaire cette sorte de critère de sécurité.

Piloter l'ensemble de production à une puissance qui, à chaque pas de temps, est inférieure à la puissance maximale acceptable, permet donc d'anticiper une dégradation, considérée comme la pire pouvant advenir, des conditions météorologiques. Cela permet donc, en toutes circonstances, ou quasiment en toutes circonstances, de délivrer au réseau de distribution une puissance délivrée dont le taux de variation reste inférieur à un taux de variation maximal admis pas le réseau, c'est-à-dire dont la pente reste comprise entre les pentes minimale et maximale autorisées mentionnées ci-dessus. Ces pentes minimale et maximale autorisées peuvent par exemple être égales respectivement à -10% d'une puissance moyenne, par minute, et +10% de cette puissance moyenne, par minute).

En cas de dégradation subite des conditions météorologiques, le système de stockage (par exemple un parc de batteries électriques) délivre une puissance de stockage, ce qui permet une décroissance *progressive* de la puissance totale délivrée par l'ensemble de production. Or la puissance de stockage fournie par un tel système de stockage dépend généralement d'un ou plusieurs paramètres d'état de ce système, en particulier de l'énergie stockée dans le système de stockage : la puissance de stockage, qui peut effectivement être délivrée, dépend généralement de l'énergie stockée dans le système de stockage, E_{stock} ; par ailleurs, la façon dont E_{stock} diminue lors d'une décharge dépend elle aussi de la puissance de stockage délivrée, plus ou forte (les pertes dans le système de stockage étant souvent fonction de la puissance de stockage délivrée, et d'une manière qui n'est pas toujours linéaire).

Réaliser l'étape de validation en question par simulation numérique, en particulier en tenant compte du modèle de comportement électrique ou énergétique du système de stockage, permet donc une détermination particulièrement réaliste de la puissance totale qui serait effectivement délivrée par l'ensemble de production, en cas de dégradation soudaine des conditions météorologiques, ce qui permet une détermination plus fiable de la puissance maximale acceptable au pas de temps suivant, et donc un pilotage à la fois plus sûr et plus efficace de l'ensemble de production en termes de puissance délivrée.

Outre les caractéristiques présentées ci-dessus, le procédé qui vient d'être présenté peut comprendre une ou plusieurs caractéristiques optionnelles et non limitatives parmi les suivantes, considérées individuellement ou selon toutes les combinaisons techniquement possibles :
- le procédé comprend en outre une étape de de détermination d'un intervalle de puissances délivrées, envisageables pour l'ensemble de production au pas de temps suivant, ledit intervalle s'étendant d'une puissance envisageable minimale à une puissance envisageable maximale,
   - la pente entre la puissance envisageable minimale, au pas de temps suivant, et la puissance délivrée, effectivement générée au pas de temps considéré, étant égale à ladite pente minimale autorisée,
   - la pente entre la puissance envisageable maximale, au pas de temps suivant, et la puissance délivrée, effectivement générée au pas de temps considéré, étant égale à ladite pente maximale autorisée ;
- la puissance maximale acceptable est déterminée en cherchant, dans ledit intervalle, la plus grande puissance électrique satisfaisant ledit critère ;
- le procédé comprend en outre une acquisition d'une puissance demandée, à fournir au réseau de distribution d'électricité, et dans lequel la puissance cible est déterminée de manière à être aussi proche que possible de la puissance demandée, tout en étant inférieure ou égale à ladite puissance maximale acceptable ;
- il est estimé que la puissance produite par le système de production est au plus égale à une puissance maximale prévue, même en cas de fluctuation à la hausse due à des variations de conditions météorologiques, une énergie électrique, qui peut encore être reçue et stockée dans le système de stockage compte tenu de l'énergie stockée déjà emmagasinée dans le système de stockage et compte tenu de sa capacité totale de stockage, est représentée par une marge de stockage d'énergie, et le procédé comprend en outre une l'étape de détermination d'une puissance minimale acceptable, au cours de laquelle il est testé si la puissance minimale acceptable satisfait le critère supplémentaire suivant :
   - si l'ensemble de production délivre ladite puissance minimale acceptable au pas de temps suivant, et si la puissance produite par le système de production devient égale à ladite puissance maximale prévue à partir du pas de temps suivant,
   - alors, compte tenu de la marge de stockage du système de stockage au pas de temps considéré, l'ensemble de production pourra délivrer ultérieurement une puissance délivrée qui, au cours du temps, rejoint progressivement ladite puissance maximale prévue, tout en variant avec une pente qui reste comprise entre la pente minimale autorisée et la pente maximale autorisée ;
- la puissance cible est déterminée de manière à être supérieure à ladite puissance minimale acceptable ;
- la puissance minimale acceptable est déterminée en cherchant, dans ledit intervalle de puissances délivrées envisageables pour l'ensemble de production au pas de temps suivant, la plus petite puissance électrique satisfaisant ledit critère supplémentaire ;
- au cours de l'étape de validation, ladite simulation numérique est réalisée en tenant compte d'une puissance maximale de décharge pouvant être fournie par le système de stockage lors d'une décharge, la puissance maximale de décharge étant déterminée en tenant compte de énergie stockée dans le système de stockage, sur la base du modèle de fonctionnement du système de stockage ;
- ladite simulation peut être réalisée en tenant compte aussi d'une puissance maximale de charge pouvant être acceptée par le système de stockage lors d'une charge, la puissance maximale de charge étant déterminée en tenant compte de énergie stockée dans le système de stockage, sur la base du modèle de fonctionnement en question ;
- au cours du procédé, la puissance minimale prévue est déterminée comme suit :
   - la puissance minimale prévue est égale, au pas de temps considéré, à la puissance produite, effectivement générée par le système de production au pas de temps considéré,
   - la puissance minimale prévue décroit ensuite linéairement au cours du temps avec une pente égale à une pente maximale de variation à la baisse, attendue, en moyenne, pour le système de production, en cas de fluctuation soudaine des conditions météorologiques, puis,
   - dès que la puissance minimale prévue rejoint une prévision basse de puissance moyenne, la puissance minimale prévue est égale à ladite prévision basse de puissance moyenne, la prévision basse de puissance moyenne étant représentative de la plus petite puissance produite attendue, pour des conditions météorologiques moyennes, les moins favorables en termes de production ;
- le procédé comprend une détermination d'une courbe de sécurité, la courbe de sécurité étant constituée, dans un plan de simulation dont l'abscisse est le temps et dont l'ordonnée est une puissance électrique, par la partie de la courbe représentative de la puissance minimale prévue pour laquelle la pente est, à chaque instant, comprise entre la pente minimale autorisée et la pente maximale autorisée ;
- le procédé comprend une détermination d'un chemin de simulation, le chemin de simulation étant le chemin qui, dans le plan de simulation :
   - relie un point de départ, dont les coordonnées sont le pas de temps suivant et la puissance maximale acceptable, à ladite courbe de sécurité,
   - a une pente comprise entre la pente minimale autorisée et la pente maximale autorisée,
   - et qui, dans le plan de simulation, a la longueur la plus courte compte tenu des deux contraintes précédentes ;
- ledit critère est testé en réalisant une simulation numérique de l'évolution de la puissance délivrée par l'ensemble de production d'électricité, au cours de laquelle il est testé si l'ensemble de production peut atteindre ladite courbe de sécurité en suivant ledit chemin de simulation, compte tenu de l'énergie stockée, présente dans le système stockage au pas de temps considéré ;
- le système de production est pilotable, la puissance produite pouvant être ajustée, pour des conditions météorologiques données, entre une puissance modulée à la baisse et une puissance modulée à la hausse ;
- lors de l'étape de pilotage de l'ensemble de production, le système de production est piloté de manière à ce que la puissance produite ait la plus grande valeur possible, compatible avec le fait que la puissance délivrée par l'ensemble de production doit atteindre ladite puissance cible au pas de temps suivant ;
- lors de l'étape de validation, ledit critère est testé en tenant compte des possibilités de modulation de la puissance produite, générée par le système de production.

Un autre aspect de l'invention concerne un dispositif de pilotage pour un ensemble de production d'électricité, l'ensemble de production d'électricité délivrant une puissance délivrée à un réseau de distribution d'électricité,
- l'ensemble de production d'électricité comprenant au moins :
   - un système de production d'électricité qui génère une puissance produite dépendant de conditions météorologiques environnantes, pour lequel il est estimé que la puissance produite est au moins égale à une puissance minimale prévue même en cas de fluctuation à la baisse due à des variations de conditions météorologiques, et
   - un système de stockage d'énergie électrique, dans lequel une énergie stockée, disponible, est emmagasinée,
- le dispositif de pilotage comprenant au moins un processeur, une mémoire, et un module communication avec les systèmes de production et de stockage, le dispositif de pilotage étant programmé pour piloter l'ensemble de production d'électricité en exécutant les étapes suivantes, exécutées à nouveau à chaque pas de temps :
   - détermination d'une puissance maximale acceptable pour le pas de temps suivant, cette étape comprenant l'étape de validation décrite ci-dessus,
   - détermination d'une puissance cible pour l'ensemble de production, la puissance cible étant déterminée de manière à être inférieure à la puissance maximale acceptable,
   - pilotage de l'ensemble de production de sorte que la puissance délivrée au pas de temps suivant soit égale à la puissance cible.

Les différentes caractéristiques optionnelles, présentées plus haut en termes de procédé, peuvent également s'appliquer au dispositif qui vient d'être décrit.

L'invention concerne aussi un ensemble de production d'électricité, tel que décrit ci-dessus, pourvu en outre du dispositif de pilotage décrit ci-dessus.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[ Fig. 1] La figure 1 représente schématiquement un ensemble de production d'électricité.
[ Fig. 2] La figure 2 représente schématiquement un exemple d'évolution d'une puissance produite par un système de production de l'ensemble de production de la figure 1.
[ Fig. 3] La figure 3 représente schématiquement des puissances minimales et maximales prévues, pour ce système de production.
[ Fig. 4] La figure 4 représente schématiquement des étapes d'un procédé de pilotage de l'ensemble de production de la figure 1.
[ Fig. 5] La figure 5 représente schématiquement l'évolution au cours du temps de différentes puissances électriques intervenant dans le procédé de la figure 4.
[ Fig. 6] La figure 6 représente plus en détail l'une des étapes du procédé de la figure 4.
[ Fig. 7] La figure 7 représente schématiquement un intervalle de puissances envisageables déterminé au cours du procédé de la figure 4.
[ Fig. 8] La figure 8 représente plus en détail certaines étapes du procédé de la figure 4.
[ Fig. 9] La figure 9 représente graphiquement la façon dont est déterminée une puissance minimale prévue, intervenant dans le procédé de la figure 4.
[ Fig. 10] La figure 10 représente graphiquement la façon dont sont déterminés des chemins de simulation, employés pour tester l'évolution ultérieure de l'ensemble de production, dans le procédé en question.
[ Fig. 11] La figure 11 représente graphiquement une manière alternative de déterminer de tels chemins de simulation.
[ Fig. 12] La figure 12 représente schématiquement des étapes mises en œuvre lors de l'exécution d'une étape de validation, réalisée au cours du procédé en question.
[ Fig.13] La figure 13 représente schématiquement des étapes mise en œuvre dans ce procédé, dans un cas où l'on tient compte de possibilités de modulation de la puissance produite, générée par le système de production.
[ Fig. 14] La figure 14 représente graphiquement la façon dont sont déterminées des puissances minimales prévues, modulées à la hausse, et à la baisse.
[ Fig. 15] La figure 15 représente graphiquement la façon dont est déterminée une zone de sécurité basse.
[ Fig. 16] La figure 16 représente graphiquement la façon dont est déterminée la zone de sécurité basse, dans un autre cas.
[ Fig. 17] La figure 17 représente graphiquement la façon dont sont déterminés des chemins de simulation, lorsque l'on tient compte des possibilités de modulation de la puissance produite, générée par le système de production.
[ Fig. 18] La figure 18 représente graphiquement la façon dont sont déterminés les chemins de simulation, dans un autre cas.
[ Fig. 19] La figure 19 représente graphiquement une manière alternative de déterminer les chemins de simulation.
[ Fig. 20] La figure 20 représente schématiquement des résultats d'une simulation de pilotage d'un ensemble de production d'électricité, réalisé conformément au procédé de la figure 4, au cours d'une journée ensoleillée, sans passage de nuages.
[ Fig. 21] La figure 21 représente schématiquement des résultats d'une simulation de pilotage de l'ensemble de production d'électricité, pour d'autres conditions météorologiques.
[ Fig. 22] La figure 22 représente schématiquement des résultats d'une simulation de pilotage de l'ensemble de production d'électricité, pour encore d'autres conditions météorologiques.

### DESCRIPTION DETAILLEE

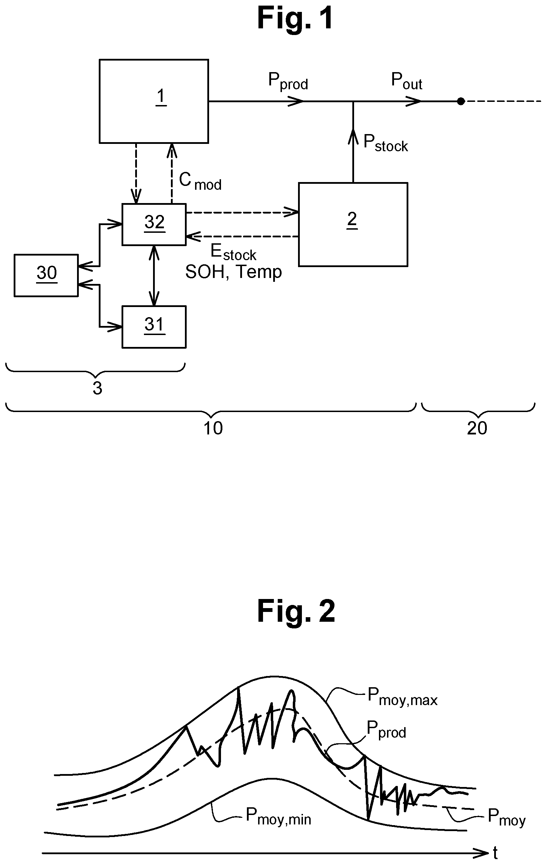

La figure 1 représente schématiquement un ensemble de production 10 d'électricité comprenant :
- un système de production 1 d'électricité qui génère une puissance produite P_{prod} qui dépend de conditions météorologiques environnantes (couverture nuageuse éventuelle, vitesse du vent,..), et
- un système de stockage 2 d'énergie électrique.

Le système de production 1 comprend ici un ou plusieurs champs de panneaux photovoltaïques. Il peut comprendre aussi un ensemble d'éoliennes, et/ou une centrale thermique solaire. Il peut comprendre aussi des installations consommant de l'énergie électrique (il est donc envisageable que la puissance produite P_{prod} soit, par moments, négative).

Ici, le système de production 1 est pilotable, et, à un instant donné, pour des conditions météorologiques fixes données, la puissance produite P_{prod} peut être ajustée (ou, en d'autres termes, commandée) entre une puissance modulée à la baisse, P_{prod,L} et une puissance modulée à la hausse P_{prod,H}.

La puissance produite P_{prod} peut par exemple être égale à une puissance de base P_{prob,b}, multipliée par un coefficient de modulation C_{mod} ajustable (commandable). La puissance de base est la puissance produite en l'absence de modulation, et le coefficient de modulation est ajustable entre un coefficient de modulation bas C_{mod,L}, inférieur à 1, et un coefficient de modulation haut C_{mod,H}, supérieur à 1.

Ici, la puissance produite P_{prod} peut être modulée à la hausse car le système de production est configuré pour, dans un régime de fonctionnement établi, par exemple dans un cas où les conditions météorologiques sont stables depuis longtemps (depuis plus d'une heure par exemple), générer une puissance légèrement inférieure à la puissance maximale que pourrait produire le système de production 1 dans ces conditions. En d'autres termes, le système de production 1 est configuré pour, en régime de fonctionnement établi, fonctionner dans un régime de légère sous-production, en produisant une puissance égale par exemple à 90% de la puissance maximale qu'il peut produire (en d'autre termes, la puissance de base P_{prod,b} vaut alors 90% de cette puissance maximale). Ce type de fonctionnement (en léger sous-régime) est intéressant car il permet de disposer d'une marge de modulation à la hausse (permettant notamment de compenser en partie une chute subite due à une dégradation des conditions météorologique).

On notera toutefois que, en variante, le système de production pourrait générer une puissance électrique qui ne soit pas modulable (la puissance électrique dépendant alors seulement des conditions météorologiques environnantes).

Comme déjà indiqué, la puissance produite P_{prod} peut varier de manière importante suite à des variations de conditions météorologiques. La figure 2 représente schématiquement, à titre d'exemple, des variations de la puissance produite P_{prod}, au cours du temps t, pour une durée d'environ une journée, et dans un cas où la puissance produite n'est pas modulée (donc dans un cas où P_{prod}=P_{prod,b}, le coefficient de modulation C_{mod} étant égal à 1).

Comme on peut le voir sur cette figure, la puissance produite P_{prod} fluctue autour d'une puissance moyenne P_{moy}, qui varie de manière progressive, sans à-coups, au cours de la journée (du fait que le soleil monte dans le ciel puis redescend au cours de celle-ci, cette puissance moyenne atteignant un maximum lorsque le soleil est au zénith). Des fluctuations rapides, dues à des passages temporaires de nuages au-dessus des panneaux solaires, se superposent à cette variation moyenne, progressive.

Sur cette figure, on a également représenté une prévision basse de puissance moyenne P_{moy,min}. Cette prévision basse correspond à la plus petite puissance produite attendue, pour le système de production 1, pour des conditions météorologiques moyennes, les moins favorables possible en termes de production. Ces conditions météorologiques correspondent ici à une situation sans fluctuations rapides des conditions météorologiques (c'est-à-dire une situation dans laquelle les variations d'ensoleillement, par exemple, se font sur une durée typique de l'ordre de la demi-journée, et on de l'ordre de la minute ou de la dizaine de minutes). Ces conditions correspondent par exemple à un ciel restant lourdement chargé de nuages, de manière uniforme, toute la journée.

Sur la figure 2, on a également représenté une prévision haute de puissance moyenne P_{moy,max}. Cette prévision haute correspond à la plus grande puissance produite attendue, pour le système de production 1, pour des conditions météorologiques moyennes, les plus favorables possible en termes de production. Ces conditions météorologiques correspondent là aussi ici à une situation sans fluctuations rapides des conditions météorologiques. Ces conditions correspondent par exemple à un air sec et à un ciel uniformément dégagé tout au long de la journée.

Les prévisions haute et basse de puissance moyenne peuvent être déterminées à partir d'un historique de mesures de la puissance produite P_{prod}, par exemple par un traitement statistique de ces mesures (tel qu'un lissage puis une moyenne entre données journalières). Elles peuvent aussi être déterminées sur la base d'un modèle théorique, en tenant compte de conditions météorologiques moyennes sur le lieu d'implantation du système de production 1.

Les mesures, ou le modèle théorique en question, permettent aussi de déterminer une pente maximale de variation à la baisse, S_{fluct,min}, attendue, en moyenne, pour le système de production, en cas de fluctuation brutale (et défavorable) des conditions météorologiques, par exemple si un nuage vient subitement s'interposer entre le soleil est les panneaux photovoltaïques. En pratique, cette prévision de pente maximale de variation à la baisse peut par exemple correspondre à une chute de puissance de 80% par minute.

Les fluctuations de la puissance produite P_{prod}, dues aux variations de conditions météorologiques, sont aussi caractérisées par une pente maximale de variation à la hausse, S_{fluct,max}, attendue, en moyenne, pour le système de production, en cas de fluctuation brutale (et favorable) des conditions météorologiques, par exemple si un nuage qui masquait le soleil est chassé par le vent, et cesse alors de s'interposer entre les panneaux photovoltaïques et le soleil. En pratique, cette prévision de pente maximale de variation à la hausse peut elle aussi correspondre à une variation de puissance de 80% par minute (+80%/min, dans ce cas).

Les variations de la puissance produite P_{prod}, bien que faiblement prédictibles, sont assez bien caractérisées par les prévisions haute et basse de puissance moyenne P_{moy,max} et P_{moy,min} et par les pentes maximales de variation à la hausse et à la baisse attendues. En effet, à chaque instant, on sait que, en moyenne (et en l'absence de modulation), la puissance produite P_{prod} :
- variera avec une pente qui, au plus, est égale aux pentes maximales en question (en valeur absolue),
- et restera comprise entre la prévision haute et la prévision basse de puissance moyenne.

Ces prévisions peuvent être affinées en tenant compte des possibilités de modulation de la puissance produite P_{prod}.

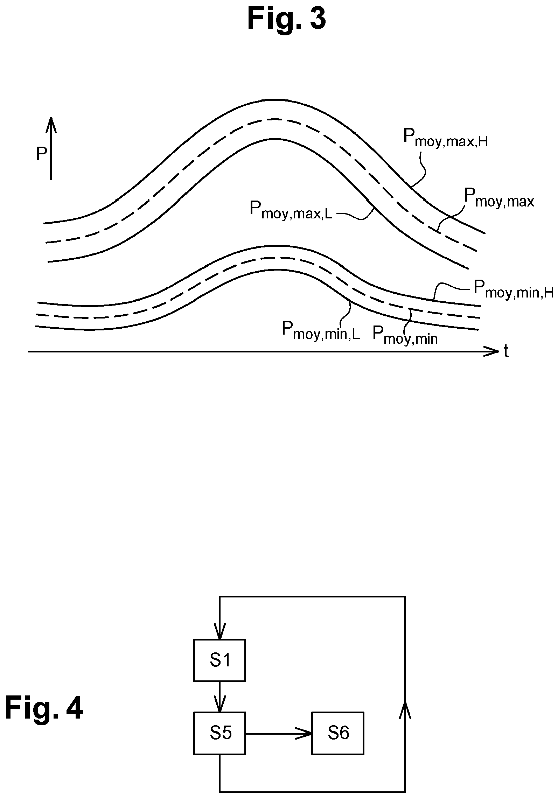

La figure 3 représente ainsi, entre autres, une prévision basse de puissance moyenne modulée à la hausse P_{moy,min,H}. Cette prévision basse modulée à la hausse correspond à la plus petite puissance produite attendue, pour le système de production 1, pour des conditions météorologiques moyennes (sans fluctuations rapides), les moins favorables possible en termes de production (ex. : ciel restant lourdement chargé de nuages, de manière uniforme, toute la journée), le système de production étant modulé à la hausse. La prévision basse de puissance moyenne modulée à la hausse P_{moy,min,H} est donc égale, ici, à la prévision basse de puissance moyenne P_{moy,min}, multipliée par le coefficient de modulation haut C_{mod,H} : P_{moy,min,H}=P_{moy,min}×C_{mod,H}.

La figure 3 représente également une prévision basse de puissance moyenne modulée à la baisse P_{moy,min,L}, une prévision haute de puissance moyenne modulée à la hausse P_{moy,max,H} et une prévision haute de puissance moyenne modulée à la baisse P_{moy,max,L}, dont les définitions sont similaires à ce qui a été donné ci-dessus pour la prévision basse de puissance moyenne modulée à la hausse P_{moy,min,H}. On a donc notamment : P_{moy,min,L}=P_{moy,min}×C_{mod,L}, P_{moy,max,H}=P_{moy,max}×C_{mod,H} et P_{moy,max,L}=P_{moy,max}×C_{mod,L}.

Des données représentatives :
- des pentes maximales de variation à la hausse et à la baisse,
- des prévisions haute et basse de puissance moyenne P_{moy,max} et P_{moy,min}, et/ou
- des prévisions haute et basse de puissance moyenne modulée à la hausse P_{moy,max,H}, P_{moy,min,H} et des prévisions haute et basse de puissance moyenne modulée à la baisse P_{moy,max,L}, P_{moy,min,L}
sont stockées dans une mémoire 31 d'un dispositif de pilotage 3 de l'ensemble de production 10 d'électricité (ces données s'avèrent en effet particulièrement utiles pour le pilotage de cet ensemble de production, comme cela sera expliqué dans la suite).

Pour ce qui est maintenant du système de stockage 2, il comprend ici un ensemble de batteries électriques. En variante ou en complément, le système de stockage pourrait par exemple comprendre un système hydroélectrique permettant de stocker de l'énergie en pompant de l'eau vers un réservoir (naturel ou artificiel) situé en hauteur.

L'énergie stockée dans le système de stockage 2 à l'instant considéré, qui est disponible et qui peut, si besoin, être restituée, est notée E_{stock} dans la suite.

Le système de stockage 2 délivre une puissance de stockage P_{stock}. Lorsque le système de stockage est piloté de manière à emmagasiner de l'énergie, la puissance de stockage P_{stock} est négative. Et lorsque le système de stockage 2 débite, cette puissance est positive.

Le système de stockage 2 est pilotable : la puissance de stockage P_{stock} qu'il délivre peut-être commandée, notamment de manière à être soit négative (recharge), soit positive (décharge).

La puissance de stockage P_{stock} que peut délivrer le système de stockage 2 est comprise entre une puissance maximale de décharge (positive) et une puissance maximale de charge (négative).

Les puissances maximales de charge et de décharge dépendent chacune de l'énergie stockée E_{stock}. Par exemple, lorsque l'énergie stockée E_{stock} est proche de l'énergie maximale Eₘₐₓ pouvant être stockée dans le système de stockage 2, la puissance maximale de charge est nettement plus petite, en valeur absolue, que lorsque l'énergie stockée E_{stock} est égale à la moitié de cette énergie maximale stockable Eₘₐₓ. Le lien entre la puissance maximale de charge et l'énergie stockée E_{stock}, et entre la puissance maximale de décharge et l'énergie stockée E_{stock}, est donné par un modèle de fonctionnement du système de stockage 2 (modèle comportemental électrique, ou énergétique). Ce lien peut prendre la forme d'une formule mathématique paramétrée par des coefficients propres au système de stockage considéré, ou prendre la forme d'une table de correspondance reliant les puissances maximales de charge et de décharge à l'énergie stockée E_{stock}.

Le modèle en question peut prendre en compte d'autres paramètres d'état du système de stockage, en plus de l'énergie stockée E_{stock}. A titre d'exemple, ce modèle peut aussi tenir compte de l'influence de la température Tₑₘₚ des batteries, ou de leur état de santé (généralement appelé SOH, ou « state of health », en anglais), sur les puissances maximales de charge et de décharge. Il peut aussi tenir compte de contraintes concernant les conditions de charge et de décharge imposées afin de limiter le vieillissement des batteries électriques (contraintes imposées en particulier aux puissances de charge et de décharge). Par ailleurs, le modèle en question permet de prédire l'évolution de paramètres d'état du système de stockage, en particulier l'évolution de l'énergie stockée E_{stock}, lorsque le système de stockage débite une puissance électrique donnée.

Ce modèle de fonctionnement peut être issu de prévisions théoriques tenant compte de caractéristiques physiques du système de stockage, ou être issu de mesures réalisées sur le système de stockage 2 pour le caractériser. Il est stocké dans la mémoire 31 du dispositif de pilotage 3 mentionné plus haut (en d'autres termes, les caractéristiques de ce modèle, telles que des tables de correspondance et/ou des formules analytiques paramétrées par des coefficients numériques, sont stockées dans cette mémoire 31).

L'ensemble de production 10 délivre une puissance électrique Pₒᵤₜ, appelée dans la suite puissance délivrée, à un réseau de distribution d'électricité 20. La puissance délivrée Pₒᵤₜ est la somme de la puissance produite P_{prod} et de la puissance de stockage P_{stock}.

Le système de production 1 et le système de stockage 2 sont pilotés par le dispositif de pilotage 3 mentionné ci-dessus.

Le dispositif de pilotage 3 comprend notamment un module de communication avec les systèmes de production 1 et de stockage 2, qui porte la référence 32, un processeur 30, et la mémoire 31 mentionnée plus haut. On rappelle que cette mémoire stocke le modèle de fonctionnement du système de stockage 2, ainsi que les données relatives aux puissances minimales et maximales attendues du système de production 1 en cas de variations des conditions météorologiques.

Le module de communication 32, par exemple une carte d'émission et de réception de données numériques, permet au dispositif de pilotage 3 d'envoyer des instructions de commande aux systèmes de production 1 et de stockage 2, de manière à piloter les puissances Pprod et P_{stock} qu'ils délivrent. Ce module permet aussi au dispositif de pilotage 3 d'acquérir des données représentatives des paramètres d'état du système de stockage mentionnés plus haut (E_{stock}, Temp, SOH).

Tel que représenté sur la figure 1, ce dispositif de pilotage est intégré à l'ensemble de production 10. En variante, le dispositif de pilotage pourrait néanmoins être délocalisé, le dispositif de pilotage étant alors distant de l'ensemble de production (par exemple de plusieurs kilomètres), le dispositif de pilotage communiquant alors avec les systèmes de production et de stockage par l'intermédiaire d'un réseau de télécommunication tel qu'internet (dans ce cas, le dispositif de pilotage peut par exemple être réalisé sous la forme d'un serveur distant, ou être réparti entre plusieurs entités distinctes, au sein d'un « cloud » délocalisé). En variante encore, le dispositif de pilotage pourrait être partiellement délocalisé, une partie seulement de ses composants (par exemple ceux relatifs aux prévisions météorologiques) étant délocalisée.

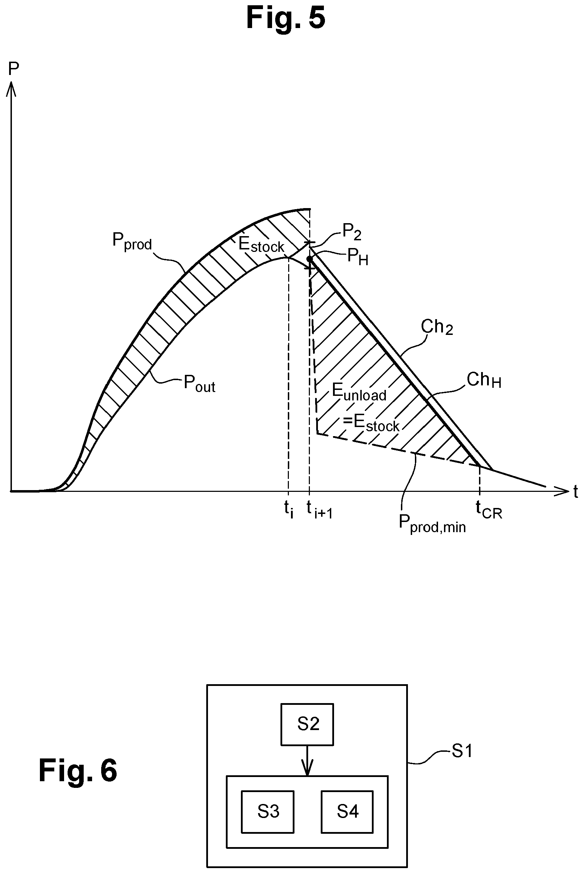

Le dispositif de pilotage 3 est programmé pour mettre en œuvre le procédé de pilotage décrit ci-dessous, dont les étapes principales sont représentées sur les figures 4 et 6.

Ce procédé comprend ici les étapes suivantes, exécutées à nouveau à chaque pas de temps ti (figure 4) :
- étape S1 : détermination d'un intervalle I_{P,A} de puissances délivrées, acceptables pour l'ensemble de production 10 au pas de temps suivant tᵢ₊₁, puis
- étape S5 : détermination d'une puissance cible Pc pour l'ensemble de production 10, la puissance cible étant déterminée de manière à être comprise dans l'intervalle de puissances acceptables I_{P,A}, puis
- étape S6: pilotage de l'ensemble de production 10 de sorte que la puissance délivrée au pas de temps suivant tᵢ₊₁, Pₒᵤₜ, soit égale à la puissance cible Pc.

Les étapes S1 à S6 sont ensuite exécutées à nouveau.

Au cours de l'étape S1, le dispositif de pilotage 3 détermine une puissance maximale acceptable P_{H} et une puissance minimale acceptable P_{L} pour l'ensemble de production 10. L'intervalle de puissances acceptables I_{P,A} s'étend de la puissance minimale acceptable P_{L} jusqu'à la puissance maximale acceptable P_{H}.

La puissance maximale acceptable P_{H} est déterminée de manière à être la plus grande puissance telle que: si l'ensemble de production 10 délivrait cette puissance au pas temps suivant tᵢ₊₁, et si les conditions météorologiques se dégradaient soudainement et durablement à partir du pas de temps suivant tᵢ₊₁, alors, il serait possible pour l'ensemble de production 10, grâce à l'énergie stockée E_{stock} présente dans le système de stockage 2, et compte tenu éventuellement d'autres contraintes concernant les caractéristiques de fonctionnement du système de stockage telles sa puissance maximale de décharge et sa puissance maximale de charge, de rejoindre, avec une pente modérée, une sorte de courbe de sécurité correspondant à une puissance minimale prévue P_{prod,min} (figure 5).

La puissance minimale prévue P_{prod,min} est la plus petite puissance attendue du système de production 1, à partir du pas de temps suivant tᵢ₊₁, en cas de dégradation soudaine et durable des conditions météorologiques.

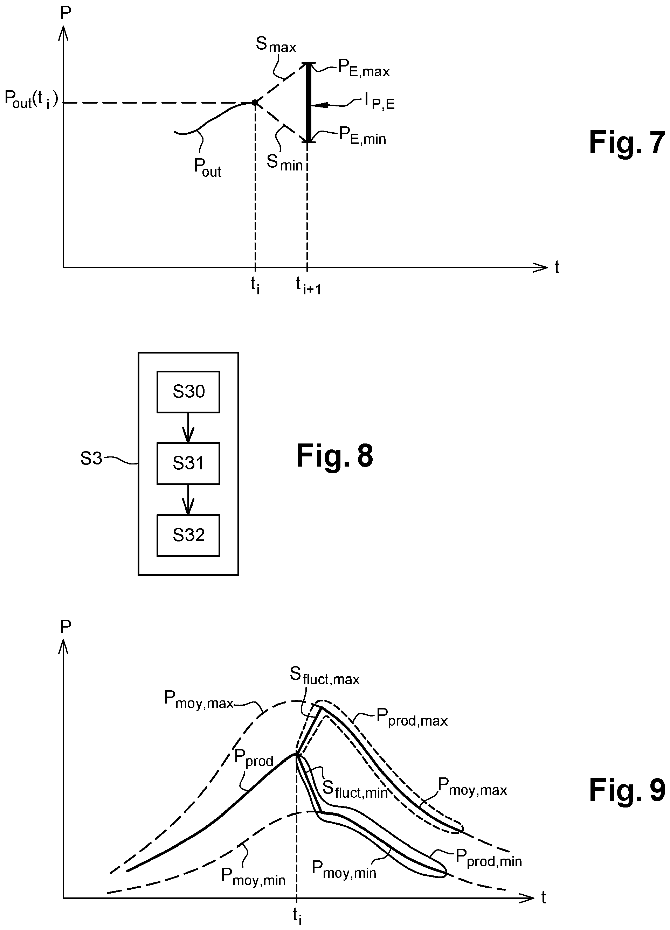

La puissance minimale prévue P_{prod,min} et son évolution au cours du temps t sont déterminées sur la base des prévisions de puissance produite qui ont été présentées plus haut, lors de la présentation du système de production 1 (en particulier sur la base de la prévision basse de puissance moyenne P_{moy,min}, et sur la base de la prévision de pente maximale de variation à la baisse S_{fluct,min}). La façon dont est déterminée la puissance minimale prévue P_{prod,min}(t) sera présentée en détail plus bas, en référence à la figure 9 notamment.

Par pente modérée, on entend ici une pente comprise entre une pente maximale autorisée Sₘₐₓ (positive) et une pente minimale autorisée Sₘᵢₙ (négative), acceptables du point de vue du réseau de distribution 20 qui reçoit la puissance délivrée Pₒᵤₜ.

En effet, comme indiqué en préambule, pour un réseau de distribution, il est particulièrement problématique sur un plan de technique de devoir gérer une variation brutale de la puissance électrique qu'il reçoit de l'un de ses fournisseurs. Pour autoriser un raccordement à un tel réseau, son organisme de gestion impose donc en général à un ensemble de production de délivrer une puissance dont la pente reste comprise entre les pentes Sₘᵢₙ et Sₘₐₓ en question.

Ces pentes minimale et maximale autorisées peuvent par exemple être égales respectivement à -10% d'une puissance moyenne (ou d'une puissance instantanée), par minute, et à +10% de cette puissance, par minute.

La figure 5 illustre la manière dont est déterminée la puissance maximale acceptable P_{H}, et l'intérêt de cette puissance seuil pour le pilotage de l'ensemble de production 10.

Cette figure montre une évolution typique de la puissance produite P_{prod} et la puissance délivrée Pₒᵤₜ, au cours du temps t au cours d'une matinée, jusqu'à un instant donné correspondant au pas de temps ti. Dans cet exemple, jusqu'au pas de temps ti, la puissance produite P_{prod}, générée par le système de production 1, est supérieure à la puissance délivrée Pₒᵤₜ, délivrée par l'ensemble de production 10. Tout au long de cette matinée, une énergie stockée E_{stock} est donc progressivement stockée dans le système de stockage 2 (supposé vide initialement, au début de la matinée en question). Cette énergie stockée correspond à l'aire de la surface qui s'étend entre la courbe P_{prod}(t) et la courbe Pₒᵤₜ(t), sur la figure 5.

Au-delà du pas de temps courant tᵢ, l'évolution de la puissance produite P_{prod}, qui peut être soumise à des variations de conditions météorologiques, n'est pas connue. Mais, comme expliqué plus haut, on connait néanmoins la pire variation à la baisse attendue pour la puissance produite, représentée par le puissance minimale prévue P_{prod,min}.

Comme illustré par cette figure, la puissance maximale acceptable P_{H} est telle que :
- si l'ensemble de production 10 délivre cette puissance au pas de temps suivant tᵢ₊₁, et si la puissance produite P_{prod} devient égale à ladite puissance minimale prévue P_{prod,min} à partir du pas de temps suivant tᵢ₊₁ (dégradation la plus défavorable envisagée)
- alors, l'ensemble de production 10 pourra néanmoins, grâce à l'énergie E_{stock} stockée dans le système de stockage, délivrer ultérieurement une puissance qui rejoint progressivement la puissance minimale prévue P_{prod,min}, avec une pente égale, au pire, à la pente minimale autorisée Sₘᵢₙ.

Dans ce procédé, au pas de temps courant tᵢ, on détermine donc une puissance maximale acceptable au pas de temps suivant tᵢ₊₁, en tenant compte d'une évolution potentielle du fonctionnement de l'ensemble de production, notamment au-delà du pas de temps suivant tᵢ₊₁, dans un cas où les conditions météorologiques se dégraderaient.

Une fois que la puissance délivrée Pₒᵤₜ a atteint la puissance minimale prévue P_{prod,min}, l'ensemble de production 10 peut délivrer une puissance qui suit cette puissance minimale prévue (dont l'évolution est généralement progressive, sauf juste après le pas de temps courant ti), et cela même si le système de stockage 2 a été complètement déchargé. La puissance minimale prévue P_{prod,min} correspond donc à une sorte de courbe de sécurité à atteindre, et la puissance maximale acceptable P_{H} est déterminée de manière à pouvoir l'atteindre avec une pente qui reste modérée.

Le fait que l'énergie stockée E_{stock}, disponible au pas de temps ti considéré soit suffisante pour atteindre ensuite progressivement la puissance minimale prévue P_{prod,min} (en cas de dégradation des conditions météorologiques), à partir de la puissance maximale acceptable P_{H}, peut se traduire notamment par le fait que : l'énergie électrique E_{unload}, qui serait débitée par le système de stockage 2 lors du passage de la puissance maximale acceptable P_{H} à la puissance minimale prévue P_{prod,min}, avec une pente égale à la pente minimale autorisée Sₘᵢₙ, est égale (ou éventuellement inférieure) à l'énergie stockée E_{stock} en question : E_{unload}=E_{stock} (voir la figure 5).

Sur la figure 5, le passage de la puissance maximale acceptable P_{H} (au pas de temps tᵢ₊₁), à la puissance minimale prévue P_{prod,min}(t), avec une pente égale à la pente minimale autorisée Sₘᵢₙ, est représenté par le chemin Ch_{H}. Et, d'un point de vue graphique, l'énergie électrique E_{unload} mentionnée ci-dessus correspond à l'aire de la surface comprise entre ce chemin Ch_{H}, et la courbe P_{prod,min}(t), depuis le pas de temps suivant tᵢ₊₁ jusqu'à un instant ultérieur tcr, pour lequel le chemin Ch_{H} rejoint la courbe P_{prod,min(t)}.

La figure 5 montre un autre chemin Ch2, rectiligne, dans le plan (t, Pₒᵤₜ), dont la pente est égale à la pente minimale autorisée Sₘᵢₙ, et qui, à partir du pas de temps tᵢ₊₁, part d'une puissance P₂ plus grande que la puissance maximale acceptable P_{H}. On comprend bien sur cette figure que l'énergie E_{stock}, stockée dans le système de stockage 2 au pas de temps ti, n'est pas assez grande pour, en cas de dégradation des conditions météorologiques, permettre à l'ensemble de production 10 d'atteindre la puissance minimale prévue P_{prod,min}(t) en suivant le chemin Ch2.

Il est donc préférable de piloter l'ensemble de production 10 de sorte qu'il délivre, au pas de temps suivant tᵢ₊₁, une puissance inférieure ou égale à la puissance maximale acceptable P_{H}.

En d'autres termes, piloter l'ensemble de production 10 à une puissance P_{prod} qui, à chaque pas de temps, est inférieure à la puissance maximale acceptable P_{H} en question, permet d'anticiper une dégradation, considérée comme la pire pouvant advenir, des conditions météorologiques. Cela permet ainsi, en toutes circonstances, ou quasiment en toutes circonstances, de délivrer au réseau de distribution 20 une puissance délivrée P_{prod} dont le taux de variation reste inférieur à un taux de variation maximal admis pas le réseau, c'est-à-dire dont la pente reste comprise entre les pentes minimale et maximale autorisées Sₘᵢₙ et Sₘₐₓ, mentionnées ci-dessus.

Dans le procédé décrit ici, la puissance maximale acceptable P_{H} est déterminée au cours d'une étape S3 (figure 6) qui comprend notamment une étape de validation S_{T} au cours de laquelle il est testé si la puissance maximale acceptable P_{H} satisfait le critère suivant (appelé critère « bas » dans la suite) :
- si l'ensemble de production 10 délivre la puissance maximale acceptable P_{H} au pas de temps suivant tᵢ₊₁, et si la puissance produite P_{prod}, générée par le système de production 1, devient égale à la puissance minimale prévue P_{prod,min} à partir du pas de temps suivant tᵢ₊₁,
- alors, compte tenu de l'énergie E_{stock} stockée dans le système de stockage 2 au pas de temps ti considéré, l'ensemble de production 10 pourra délivrer ultérieurement une puissance délivrée Pₒᵤₜ qui, au cours du temps t, rejoint progressivement la puissance minimale prévue P_{prod,min}, tout en variant avec une pente qui reste comprise entre la pente minimale autorisée Sₘᵢₙ et la maximale autorisée Sₘₐₓ.

Au cours de l'étape S3, la puissance maximale acceptable P_{H} est déterminée plus précisément comme étant la plus grande puissance électrique satisfaisant le critère « bas » en question.

On notera toutefois que la puissance maximale acceptable P_{H}, obtenue ici grâce à une procédure numérique de maximisation, ne correspond pas nécessairement à un maximum absolu ; il s'agit plutôt d'une puissance qui est déterminée de manière à être proche d'un tel maximum absolu (l'écart entre les deux étant inférieur à un seuil de tolérance/convergence donné).

En pratique, au cours de l'étape S3, on teste successivement, pour différentes puissances électriques envisageables (le choix de ces puissances à tester dépendant de la procédure de maximisation employée), si le critère bas mentionné ci-dessus est vérifié, la puissance maximale acceptable P_{H} correspondant finalement à la plus grande des puissances testées pour laquelle ce critère est vérifié.

Lors du pilotage de l'ensemble de production 10, il est intéressant aussi de tenir compte du fait que la puissance produite P_{prod} peut non seulement chuter subitement, mais aussi augmenter subitement (par exemple lorsqu'un nuage qui masquait le soleil se retire, poussé rapidement par le vent). En cas d'augmentation subite, pour limiter le taux de variation de la puissance délivrée Pₒᵤₜ, le système de stockage 2 est piloté de manière à emmagasiner de l'énergie (P_{stock} négative).

Mais les capacités de stockage de ce système sont nécessairement limitées. Et, en outre, à l'instant considéré, le système de stockage pourrait déjà être presque complètement chargé. Le système de stockage 2 ne peut donc pallier à une augmentation de la puissance produite P_{prod} que dans une certaine mesure.

Lorsque l'on détermine la puissance cible Pc à délivrer au pas de temps suivant tᵢ₊₁, il est donc souhaitable, comme ici, de tenir compte du fait que :
- la puissance produite peut aussi varier subitement à la hausse, et que
- le système de stockage 2 a, au pas de temps ti considéré, une certaine marge de stockage, limitée, égale à la différence entre sa capacité de stockage totale (Eₘₐₓ), et l'énergie E_{stock} déjà stockée dans ce système.

C'est pour tenir compte de ces deux aspects que la puissance cible Pc est choisie supérieure à la puissance minimale acceptable P_{L}, à l'étape S5.

En l'occurrence, la puissance minimale acceptable P_{L} est déterminée, lors d'une étape S4 (figure 6), de manière à être la plus petite puissance électrique pour laquelle le critère « haut » suivant est vérifié :
- si l'ensemble de production 10 délivre la puissance minimale acceptable P_{L} au pas de temps suivant tᵢ₊₁, et si la puissance produite P_{prod} par le système de production 1 devient égale à une puissance maximale prévue P_{prod,max} à partir du pas de temps suivant tᵢ₊₁,
- alors, compte tenu de la marge de stockage du système de stockage 2 au pas de temps tᵢ considéré, l'ensemble de production 10 pourra délivrer ultérieurement une puissance délivrée Pₒᵤₜ qui, au cours du temps t, rejoint progressivement ladite puissance maximale prévue P_{prod,max}, tout en variant avec une pente qui reste comprise entre la pente minimale autorisée Sₘᵢₙ et la pente maximale autorisée Sₘₐₓ.

La puissance maximale prévue P_{prod,max} est la plus grande puissance attendue du système de production 1, à partir du pas de temps suivant tᵢ₊₁, en cas de variation soudaine et durable, à la hausse, suite à une variation des conditions météorologiques.

De même que la puissance minimale prévue P_{prod,min}, la puissance maximale prévue P_{prod,max} et son évolution au cours du temps t sont déterminées sur la base des prévisions de puissance qui ont été présentées plus haut, lors de la présentation du système de production 1 (en particulier sur la base de la prévision haute de puissance moyenne P_{moy,max}, et sur la base de la prévision de pente maximale de variation à la hausse S_{fluct,max}). La façon dont est déterminée la puissance maximale prévue P_{prod,max}(t) sera présentée en détail plus bas (en référence à la figure 9).

Avant de décrire plus en détail les étapes S3 et S4 de détermination des puissances minimale et maximale acceptables, nous revenons sur les étapes S5 et S6 du procédé de pilotage, introduite plus haut lors de la présentation de la figure 4.

Ici, l'étape S5 comprend une acquisition d'une puissance demandée P_{dem}, à fournir au réseau de distribution 20 d'électricité. La puissance demandée P_{dem} peut par exemple être saisie par un opérateur (qui peut être un opérateur distant gérant le réseau de distribution d'électricité). La puissance cible Pc est ensuite déterminée de manière à être aussi proche que possible de la puissance demandée P_{dem}, tout en étant comprise dans l'intervalle de puissances acceptables I_{P,A} déterminé précédemment. En variante, une gamme de puissances correspondant directement à l'intervalle I_{P,A} en question pourrait être proposée à l'opérateur, celui-ci sélectionnant ensuite dans cette gamme une puissance électrique, la puissance cible PC étant alors égale à la puissance ainsi sélectionnée.

Lors de l'étape S6 suivante, l'ensemble de production 10 est piloté, par le dispositif de pilotage 3, de manière à délivrer la puissance cible Pc, au pas de temps suivant. Ce pilotage est réalisé de manière légèrement différente selon que le système de production est modulable, ou non.

Lorsque le système de production 1 n'est pas modulable, le dispositif de pilotage 3 pilote la puissance de stockage P_{stock} délivrée par le système de stockage 2 (à une valeur négative lorsqu'il s'agit de charger ce système, et à une valeur positive lorsqu'il de le faire débiter), de sorte que la puissance totale Pₒᵤₜ délivrée par l'ensemble de production atteigne la puissance cible Pc, au pas de temps suivant tᵢ₊₁.

Mais lorsque le système de production 1 est pilotable, comme ici, plusieurs solutions sont envisageables pour atteindre la puissance cible Pc, à l'étape S6. A titre d'exemple, pour faire varier la puissance délivrée Pₒᵤₜ, on peut par exemple moduler la puissance produite P_{prod} tout en maintenant la puissance de stockage P_{stock} à la même valeur que précédemment. On peut aussi, au contraire, maintenir la puissance produite P_{prod} à la même valeur que précédemment, et modifier la puissance de stockage P_{stock} (par exemple en diminuant le taux de charge des batteries).

A l'étape S6, lorsque le système de production 1 est pilotable, il est piloté, de préférence, de sorte que le coefficient de modulation C_{mod} ait la plus grande valeur possible, compatible avec le fait que la puissance délivrée Pₒᵤₜ doit atteindre la puissance cible Pc au pas de temps suivant (quitte, pour atteindre la puissance cible Pc, à ajuster en conséquence le taux de charge de batteries - c'est-à-dire la puissance de stockage). Cette disposition permet avantageusement de maximiser la puissance produite, pour une puissance cible donnée (l'énergie excédentaire étant alors stockée dans le système de stockage). Lors de cette étape, on peut aussi prévoir de commander le coefficient de modulation C_{mod} à la plus grande valeur possible, compatible avec la puissance cible Pc à atteindre pour l'ensemble de production (comme expliqué ci-dessus), mais tout en limitant ce coefficient de modulation à une valeur inférieure ou égale à 1 (pour conserver une marge de modulation à la hausse).

Maintenant que les étapes principales S1, S5 et S6 ont été présentées dans leur ensemble, l'étape S1, qui joue un rôle central dans ce procédé, peut être décrite plus en détail.

Cette étape comprend ici les étapes suivantes (figure 6) :
- étape S2 : détermination d'un intervalle I_{P,E} de puissances délivrées, envisageables pour l'ensemble de production 10 au pas de temps suivant tᵢ₊₁, permettant d'obtenir, entre les pas de temps ti et tᵢ₊₁, une pente de variation comprise entre la pente minimale autorisée Sₘᵢₙ et la pente maximale autorisée Sₘₐₓ (figure 7),
- étape S3 (déjà mentionnée) : détermination de la puissance maximale acceptable P_{H}, en cherchant, dans l'intervalle I_{P,E} en question, la plus grande puissance électrique satisfaisant le critère « bas » mentionné précédemment, et
- étape S4 (déjà mentionnée) : détermination de la puissance minimale acceptable P_{L}, en cherchant, dans l'intervalle I_{P,E}, la plus petite puissance électrique satisfaisant le critère « haut » présenté précédemment.

L'intervalle de puissances envisageables I_{P,E}, déterminé à l'étape S2 s'étend d'une puissance envisageable minimale P_{E,min} à une puissance envisageable maximale P_{E,max} (figure 7).

La puissance envisageable minimale P_{E,min} est déterminée de manière à ce que, dans le plan (t, Pₒᵤₜ), la pente du segment qui relie le point de coordonnées [ti, Pₒᵤₜ(tᵢ)], au point de coordonnées [tᵢ₊₁, P_{E,min}] soit égale à la pente minimale autorisée Sₘᵢₙ mentionnée précédemment.

De même, la puissance envisageable maximale P_{E,max} est déterminée de manière à ce que, dans le plan (t, Pₒᵤₜ), la pente du segment qui relie le point de coordonnées [tᵢ, Pₒᵤₜ(tᵢ)], au point de coordonnées [tᵢ₊₁, P_{E,max}] soit égale à la pente maximale autorisée Sₘₐₓ.

L'un des objectifs du procédé de pilotage est d'éviter que la puissance délivrée Pₒᵤₜ ne varie avec une pente supérieure à la pente Sₘₐₓ, ou inférieure à la pente Sₘᵢₙ. La puissance cible Pc, que délivrera l'ensemble de production 10 au pas de temps suivant, devra donc être comprise dans l'intervalle de puissances envisageables I_{P,E}. Puisque cette puissance cible Pc devra finalement être comprise dans l'intervalle I_{P,E}, il est donc intéressant, dès l'étape S3, de limiter la recherche de la puissance maximale acceptable P_{H} à cet intervalle. Cela réduit en effet le domaine dans lequel cette puissance est recherchée (on réduit ce domaine à sa partie utile en pratique), et accélère ainsi la détermination de la puissance maximale acceptable P_{H}, d'un point de vue numérique. De même, limiter la recherche de la puissance minimale acceptable P_{L} à l'intervalle I_{P,E}, lors de l'étape S4, permet d'accélérer cette recherche, en écartant dès le début de cette recherche les puissances incompatibles avec une variation suffisamment progressive de la puissance délivrée Pₒᵤₜ.

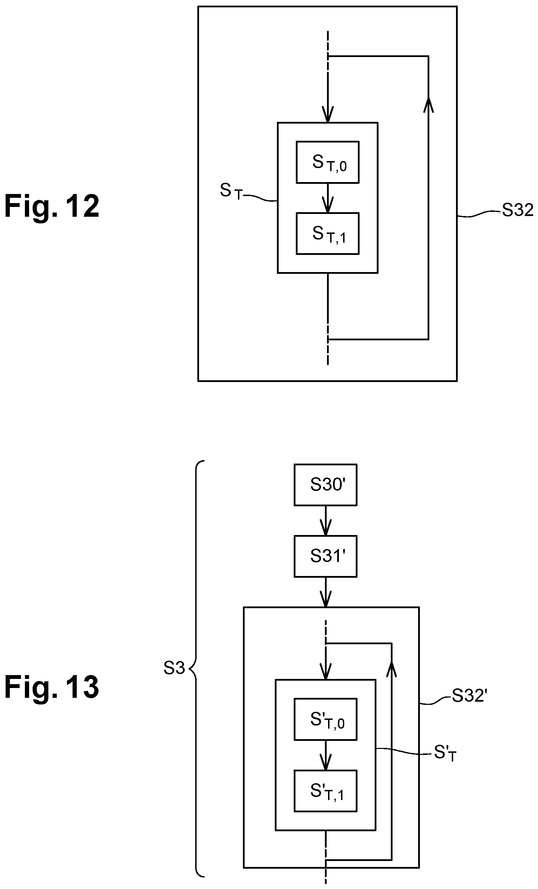

Les étapes S3 et S4 en elles-mêmes sont maintenant décrites plus en détail. Une première variante de ces étapes, dans laquelle le système de production 1 n'est pas modulé (c'est-à-dire pour laquelle C_{mod} reste constant, égal à 1) est décrite tout d'abord, en référence aux figures 8 à 12. Une deuxième variante, dans laquelle on tient compte des possibilités de modulation du système de production 1, est décrite ensuite, en référence aux figures 13 à 19.

Comme on peut le voir sur la figure 8, l'étape S3 comprend ici les étapes suivantes :
- étape S30 : détermination de la puissance minimale prévue P_{prod,min}, puis
- étape S31 : détermination d'une courbe de sécurité basse P_{safe,L}, puis
- étape S32 : détermination de la puissance maximale acceptable P_{H}.

Au cours de l'étape S30, la puissance minimale prévue P_{prod,min} est déterminée comme suit (voir la figure 9):
- la puissance minimale prévue P_{prod,min} est égale, au pas de temps ti considéré, à la puissance produite P_{prod}, effectivement générée par le système de production 1 à cet instant,
- la puissance minimale prévue P_{prod,min} décroit ensuite linéairement au cours du temps t avec une pente égale à la prévision de pente maximale de variation à la baisse S_{fluct,min}, attendue, en moyenne, pour le système de production 1, en cas de fluctuation soudaine des conditions météorologiques, puis
- dès que la puissance minimale prévue P_{prod,min} rejoint la prévision basse de puissance moyenne P_{moy,min}, la puissance minimale prévue est égale à la prévision basse de puissance moyenne P_{moy,min} (en d'autres termes, la puissance minimale prévue P_{prod,min} suit ensuite la prévision basse de puissance moyenne Pmoy,min).

Comme déjà expliqué, la puissance minimale prévue P_{prod,min} (qui est une grandeur qui varie au cours du temps) constitue en quelque sorte un scénario représentatif de la pire variation à la baisse attendue pour la puissance produite P_{prod}, en cas de dégradation des conditions météorologiques à partir du pas de temps ti.

La puissance maximale prévue P_{prod,max} est déterminée de manière complètement analogue à ce qui a été présenté ci-dessus pour la puissance minimale prévue P_{prod,min}, mais en fonction de la prévision haute de puissance moyenne P_{moy,max} et de la prévision de pente maximale de variation à la hausse S_{fluct,max}, au lieu d'être déterminé en fonction de la puissance P_{moy,min} et de la pente S_{fluct,min} (voir la figure 9).

La courbe de sécurité basse P_{safe,L} déterminée à l'étape S31 est constituée, dans un plan de simulation dont l'abscisse est le temps t et dont l'ordonnée est une puissance électrique, par la partie de la courbe représentative de la puissance minimale prévue P_{prod,min} pour laquelle la pente est, à chaque instant, comprise entre la pente minimale autorisée Sₘᵢₙ et la pente maximale autorisée Smax.

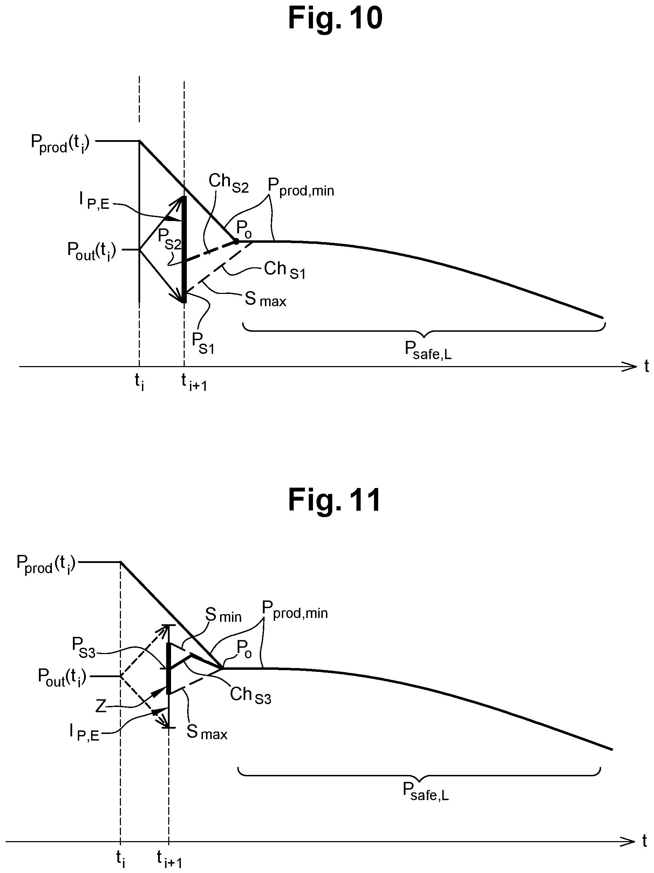

Ici, la prévision de pente maximale de variation à la baisse S_{fluct,min} (typiquement -80%/minute) est plus grande, en valeur absolue, que la pente minimale autorisée (typiquement -10% par minute). La partie de la courbe P_{prod,min}(t) correspondant à la décroissance linéaire avec une pente S_{fluct,min} ne fait donc pas partie de la courbe de sécurité P_{safe,L}, ici. En revanche, en général, la prévision basse de puissance moyenne P_{moy,min} varie au cours du temps avec une pente modérée, si bien que la courbe de sécurité P_{safe,L} correspond en général à la deuxième partie de la courbe P_{prod,min}(ₜ), pour laquelle P_{prod,min}=P_{moy,min} (figure 10).

Au cours de l'étape S32, la puissance maximale acceptable P_{H} est déterminée par une procédure de maximisation, en cherchant, dans l'intervalle de puissances envisageables I_{P,E} la plus grande puissance satisfaisant le critère bas.

Cette procédure de maximisation peut par exemple être réalisée par dichotomie.

Dans ce cas, au cours de l'étape S32, on commence par rester si la puissance maximale envisageable P_{E,max} satisfait le critère bas mentionné plus haut, en exécutant l'étape de validation S_{T} pour la puissance P_{E,max}. Si la puissance P_{E,max} satisfait ce critère, la puissance maximale acceptable P_{H} est alors déterminée comme étant égale à P_{E,max} (et la procédure de maximisation s'arrête). Sinon, on exécute à nouveau l'étape de validation S_{T}, pour une puissance égale à la moitié de la somme de P_{E,max} et de P_{E,min}, pour tester si cette puissance médiane satisfait le critère bas.

Si cette puissance médiane satisfait le critère question, on teste ensuite une puissance égale à la moitié de la somme de la puissance médiane en question, et de la puissance maximale envisageable P_{E,max}. Au contraire, si la puissance médiane ne satisfait pas le critère bas, on teste ensuite une puissance égale à la moitié de la somme de la puissance médiane et de la puissance minimale envisageable P_{E,min}, et ainsi de suite.

Cette recherche pas dichotomie s'arrête lorsqu'un critère de convergence est satisfait, par exemple lorsqu'un écart entre deux puissances, testées lors de deux exécutions successives de l'étape de validation S_{T}, est inférieur à un seuil donné, fixe.

On notera que, au terme de cette procédure de maximisation, la puissance maximale acceptable est effectivement la puissance qui, parmi les différentes puissances testées, est la plus grande puissance satisfaisant le critère bas.

On notera aussi que la procédure de maximisation mise en œuvre à l'étape S32 pourrait être exécutée conformément à une autre méthode numérique que la méthode par dichotomie présentée ci-dessus.

L'étape de validation S_{T}, qui est exécutée pour différentes puissances à tester, comprend ici les étapes suivantes (figure 12) :
- S_{T,0} : détermination d'un chemin de simulation Ch_{S1}, Ch_{S2} qui relie : un point de départ P_{S1}, P_{S2} dont les coordonnées sont le pas de temps suivant tᵢ₊₁ et la puissance à tester, à la courbe de sécurité basse P_{safe,L}, et
- S_{T,1} : test du critère bas, en réalisant une simulation numérique de l'évolution de la puissance délivrée par l'ensemble de production d'électricité 10, au cours de laquelle il est testé si l'ensemble de production 10 peut atteindre ladite courbe de sécurité P_{safe,L}, en suivant le chemin de simulation Ch_{S1}, Ch_{S2}, compte tenu de l'énergie E_{stock} stockée dans le système stockage 2 au pas de temps ti.

Ici, au cours de l'étape S_{T,0}, le chemin de simulation Ch_{S1}, Ch_{S2} est déterminé de manière :
- à avoir une pente comprise entre la pente minimale autorisée et la pente maximale autorisée, et de manière
- à avoir, dans le plan de simulation (t, Pₒᵤₜ), la longueur la plus courte compte tenu des contraintes en question (le chemin en question est donc rectiligne, dans le plan de simulation).

Sur la figure 10, on a représenté le chemin de simulation Ch_{S1}, Ch_{S2} pour deux puissances à tester différentes (comprises dans l'intervalle I_{P,E}), correspondant à deux points de départ P_{S1} et P_{S2}. Pour la puissance correspondant au point de départ P_{S1}, le chemin le plus court pour rejoindre la courbe de sécurité, noté Ch_{S1}, est un chemin rectiligne dont la pente est égale à la plus grande pente autorisée, Sₘₐₓ. Pour la puissance correspondant à l'autre point de départ P_{S2}, le chemin le plus court pour rejoindre la courbe de sécurité, Ch_{S2}, est un chemin rectiligne, de pente intermédiaire entre les pentes maximale et minimale autorisées, et qui relie le point de départ P_{S2} au premier point, Po, de la courbe de sécurité basse P_{safe,L} (le premier point Po de cette courbe est le point de la courbe correspondant à l'instant à partir duquel cette courbe commence).

Déterminer le chemin de simulation Ch_{S1}, Ch_{S2} comme indiqué ci-dessus est particulièrement intéressant car ce type de chemin permet de rejoindre la courbe de sécurité rapidement, en sollicitant aussi peu que possible le système de stockage 2, dont les capacités de stockage et de restitution sont limitées.

En d'autres termes, en choisissant le chemin de simulation de cette manière, si le critère bas n'est pas vérifié, c'est que l'ensemble de production 10 ne peut pas, compte tenu de l'énergie stockée E_{stock} au pas temps ti, atteindre la courbe de sécurité, même en suivant ce chemin pour lequel le système de stockage 2 est le moins sollicité. Réaliser l'étape de validation de cette manière permet donc d'obtenir, pour la puissance maximale acceptable P_{H}, une valeur particulièrement fiable et réaliste.

En alternative, le chemin de simulation déterminé à l'étape S_{T,0}, pourrait être déterminé comme expliqué ci-dessous.

Tout d'abord, on détermine une zone, appelée zone de proximité Z dans la suite, qui, pour le pas de temps tᵢ₊₁, correspond aux puissances permettant de rejoindre le premier point Po de la courbe de sécurité basse P_{safe,L} avec une pente comprise entre la pente minimale autorisée Sₘᵢₙ et la pente maximale autorisée Sₘₐₓ (figure 11).

Si la puissance à tester est située hors de la zone de proximité Z, au-dessus de cette zone, alors le chemin de simulation est un chemin rectiligne, dont la pente est égale à la pente minimale autorisée Sₘᵢₙ.

Si la puissance à tester est située hors de la zone de proximité Z, au-dessous de cette zone, alors le chemin de simulation est un chemin rectiligne, dont la pente est égale à la pente maximale autorisée Sₘₐₓ.

Et si la puissance à tester est située dans la zone de proximité Z, alors, le chemin de simulation comprend une première partie rectiligne, de pente Sₘₐₓ, puis une deuxième partie rectiligne, de pente Sₘᵢₙ, aboutissant au premier point Po de la courbe de sécurité basse (cas du chemin de simulation Ch_{S3}, sur la figure 11).

Ce type de chemin permet lui aussi une sollicitation réduite du système de stockage 2, lors de la transition allant de la puissance à tester jusqu'à la courbe de sécurité.

Lors de l'étape S_{T,1}, comme déjà indiqué, on réalise une simulation numérique de l'évolution de la puissance délivrée par l'ensemble de production d'électricité 10, au cours de laquelle il est testé si l'ensemble de production 10 peut atteindre la courbe de sécurité basse P_{safe,L}, en suivant le chemin de simulation Ch_{S1}, Ch_{S2} ; Ch_{S3} déterminé précédemment, compte tenu de l'énergie E_{stock} stockée dans le système stockage 2 au pas de temps ti.

Cette simulation est réalisée en tenant compte notamment du fait que la puissance maximale de décharge du système de stockage 2, ainsi que sa puissance maximale de charge, dépendent de l'énergie stockée dans celui-ci. Cette dépendance est représentée par le modèle de fonctionnement du système de stockage 2 qui a été présenté plus haut, et dont les caractéristiques sont stockées dans la mémoire 31.

Ici, lors de cette simulation, on tient compte, en plus de d'énergie stockée E_{stock}, d'autres paramètres d'état du système de stockage 2, tels que la température Tₑₘₚ des batteries, ou leur état de santé SOH, et de l'influence de ces paramètres d'états sur les puissances maximales de charge et de décharge (via le modèle de fonctionnement du système de stockage).

L'étape S4, de détermination de la puissance minimale acceptable P_{L}, est déterminée de manière complètement analogue (symétrique) de ce qui a été présenté ci-dessus pour l'étape S3, mais :
- sur la base de la puissance maximale prévue P_{prod,max}, au lieu de la puissance minimale prévue P_{prod,min},
- et testant le critère haut, au lieu de du critère bas, et
- par une procédure de minimisation (par exemple par dichotomie), au lieu d'une procédure de maximisation.

La manière de réaliser les étapes S3 et S4 (détermination des puissances maximales et minimales acceptables P_{H} et P_{L}), lorsque l'on tient compte des possibilités de modulation du système de production 1, est présentée maintenant, en référence aux figures 13 à 19.

Moduler la puissance délivrée par le système de production 1 en fonction des variations de conditions météorologiques, en plus d'ajuster la puissance reçue ou délivrée par le système de stockage 2 en fonction de ces conditions, permet un lissage plus efficace des variations de la puissance délivrée Pₒᵤₜ.

Tenir compte de ces possibilités de modulation, permet une détermination plus fine, plus réaliste, de la gamme de puissances dans laquelle la puissance cible peut être choisie. Ainsi, la puissance maximale acceptable P_{H} déterminée de cette manière est généralement plus grande que celle obtenue par une détermination, en quelque sorte plus sévère, qui ne tient pas compte des possibilités de modulation du système de production. Et une détermination au plus juste des puissances minimale et maximale acceptables, tel que proposé ci-dessous (i.e. : en tenant compte des possibilités de modulation en question) s'avère intéressante en pratique, car cela permet ensuite, à l'étape S5, de proposer à un opérateur une gamme de puissances acceptables aussi étendue que possible. En d'autres termes, cela permet de proposer à l'opérateur une gamme de solutions acceptables, pour la puissance délivrée à laquelle piloter l'ensemble de production au pas de temps suivant, qui est la plus grande possible (compte tenu des contraintes à respecter mentionnées plus haut). Cela permet donc à l'opérateur de choisir une solution (un type fonctionnement) la plus efficace en termes de ratio production/stockage (i.e. : cela permet de maximiser la puissance électrique totale injectée dans le réseau, en donnant plus de latitude de réglage puisque les bornes de fonctionnement P_{H} et P_{L} sont calculées en tenant compte des possibilités de modulation en question).

Dans ce cas (prise en compte des possibilités de modulation), l'étape S3 comprend les étapes suivantes (figure 13) :
- étape S30' : détermination d'une puissance minimale prévue modulée à la baisse P_{prod,min,L}, et d'une puissance minimale prévue modulée à la hausse P_{prod,min,H}, puis
- étape S31' : détermination d'une zone de sécurité basse Z_{safe,L}, dans le plan de simulation (t, Pₒᵤₜ), puis
- étape S32' : détermination de la puissance maximale acceptable P_{H}.

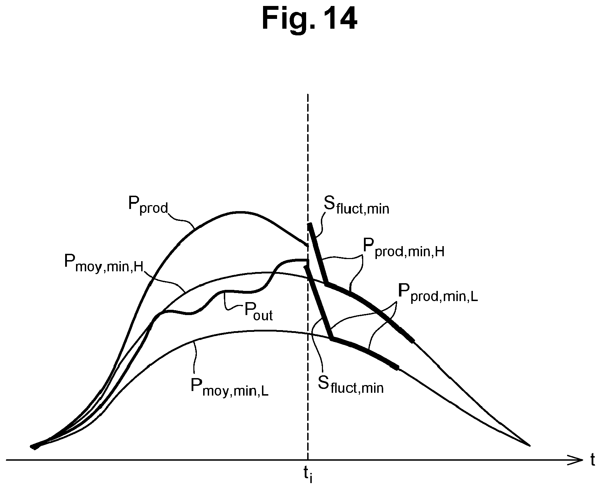

Au cours de l'étape S30', la puissance minimale prévue modulée à la baisse P_{prod,min,L} est déterminée comme suit (voir la figure 14) :
- la puissance minimale prévue modulée à la baisse P_{prod,min,L} est égale, au pas de temps ti considéré, à la puissance produite P_{prod}, effectivement générée par le système de production 1 à cet instant, multipliée par le coefficient de modulation bas C_{mod,L},
- la puissance minimale prévue modulée à la baisse P_{prod,min,L} décroit ensuite linéairement au cours du temps t avec une pente égale à la prévision de pente maximale de variation à la baisse S_{fluct,min}, attendue, en moyenne, pour le système de production 1, en cas de fluctuation soudaine des conditions météorologiques, puis
- dès que la puissance minimale prévue modulée à la baisse P_{prod,min,L} rejoint la prévision basse de puissance moyenne modulée à la baisse P_{moy,min,L}, la puissance minimale prévue modulée à la baisse P_{prod,min,L} reste égale à prévision basse de puissance moyenne modulée à la baisse P_{moy,min,L}, en suivant l'évolution de cette puissance.

La puissance minimale prévue modulée à la hausse P_{prod,min,H} est déterminée de manière analogue, mais sur la base de la prévision basse de puissance moyenne modulée à la hausse (et non à la baisse), P_{moy,min,H}.

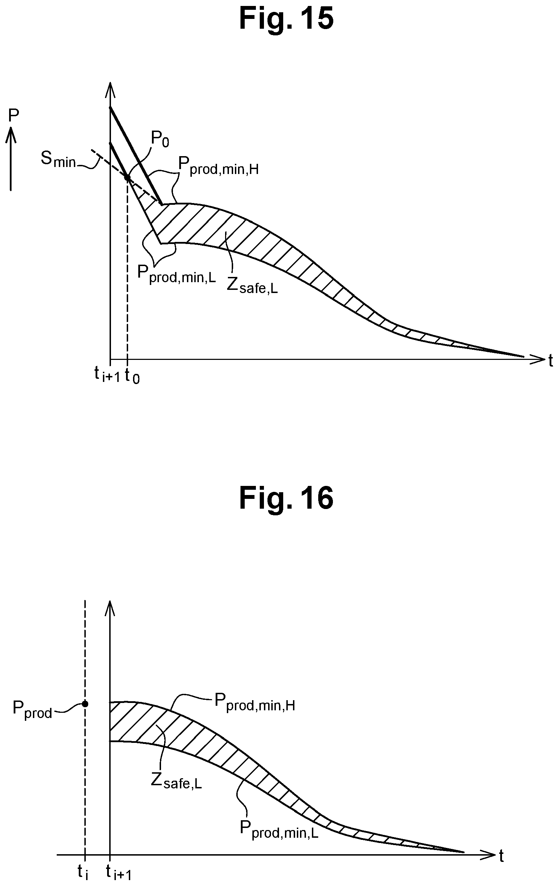

La zone de sécurité basse Z_{safe,L} déterminée à l'étape S31' est constituée, dans le plan de simulation dont l'abscisse est le temps t et dont l'ordonnée est une puissance électrique, par une zone :
- qui est comprise entre : la courbe représentative de la puissance minimale prévue modulée à la baisse P_{prod,min,L}, et la courbe représentative de la puissance minimale prévue modulée à la hausse P_{prod,min,H} (figures 15 et 16), et
- à l'intérieur de laquelle la puissance électrique peut évoluer, au cours du temps, avec une pente qui reste comprise entre les pentes minimale et maximale autorisées Sₘᵢₙ et Sₘₐₓ.

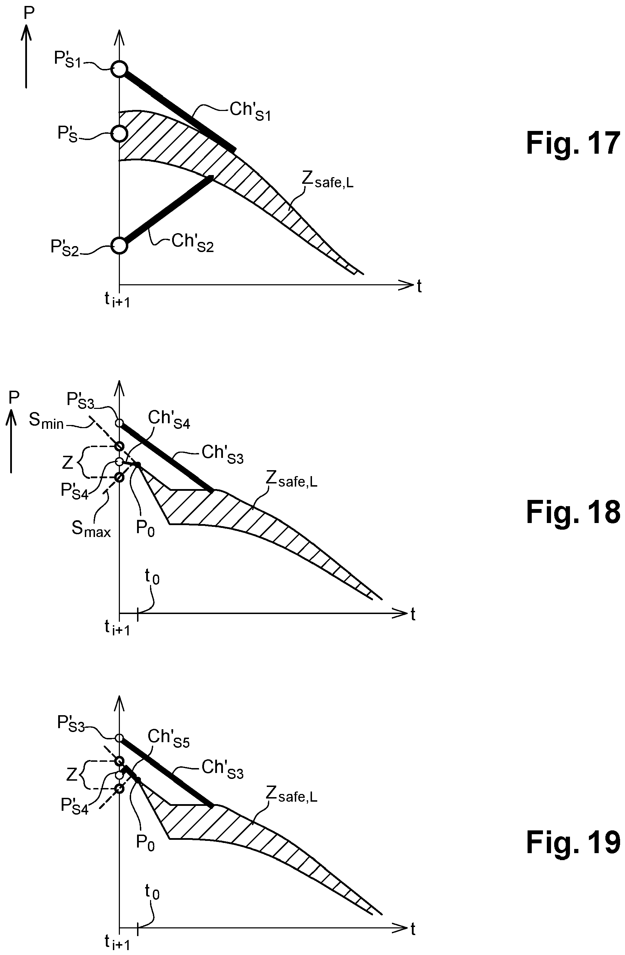

On rappelle que, ici, la pente minimale autorisée Sₘᵢₙ est plus petite, en valeur absolue, que la prévision de pente maximale de variation à la baisse S_{fluct,min}. En général, la zone de sécurité basse Z_{safe,L} s'étend donc à partir d'une date to qui est postérieure au pas de temps tᵢ₊₁ (figures 15 et 18). Le point premier point de la zone sécurité basse Z_{safe,L}, c'est-à-dire celui pour lequel t=to, est noté Po.

Dans certaines circonstances, en particulier si la puissance produite P_{prod}(ti) est proche des prévisions basses de puissance moyenne P_{moy,min,L} et P_{moy,min,H}, la zone de sécurité basse Z_{safe,L} peut néanmoins débuter dès le pas de temps tᵢ₊₁, et occuper toute la zone comprise entre la puissance minimale prévue modulée à la baisse P_{prod,min,L}, et la puissance minimale prévue modulée à la hausse P_{prod,min,H} (figure 16).

Au cours de l'étape suivante S32', la puissance maximale acceptable P_{H} est recherchée, au sein de l'intervalle de puissances envisageables I_{P,E}, par une procédure de maximisation telle que celle décrite plus haut (lors de la présentation de l'étape S32). Au cours de cette procédure de maximisation, l'étape de validation, S'_{T}, est néanmoins réalisée de manière différente de ce qui a été décrit plus haut, dans le cas où les possibilités de modulation n'étaient pas prises en compte (figures 8 à 12).

En l'occurrence, l'étape de validation S'_{T} comprend alors les étapes suivantes (figure 13) :
- S'_{T,0} : détermination d'un chemin de simulation Ch'_{S1}, Ch'_{S2}, Ch'_{S3}, Ch'_{S4} ; Ch'_{S5}, qui relie un point de départ P'_{S1}, P'_{S2}, P'_{S3}, P'_{S4}, dont les coordonnées sont le pas de temps suivant tᵢ₊₁ et la puissance à tester, à la zone de sécurité basse Z_{safe,L}, et
- S'_{T,1} : test du critère bas, en réalisant une simulation numérique de l'évolution de la puissance délivrée par l'ensemble de production d'électricité 10, au cours de laquelle il est testé si l'ensemble de production 10 peut atteindre la zone de sécurité basse Z_{safe,L}, en suivant le chemin de simulation déterminé précédemment, compte tenu de l'énergie E_{stock} stockée dans le système stockage 2 au pas de temps ti.

Au cours de l'étape S'_{T,0}, le chemin de simulation Ch'_{S1}, Ch'_{S2}, Ch'_{S3}, Ch'_{S4} est déterminé, là encore, de manière :
- à avoir une pente comprise entre la pente minimale autorisée Sₘᵢₙ et la pente maximale autorisée Sₘₐₓ, et de manière
- à avoir, dans le plan de simulation (t, Pₒᵤₜ), la longueur la plus courte compte tenu de ces contraintes (le chemin en question est donc rectiligne, dans le plan de simulation).

En d'autres termes, le chemin de simulation est déterminé ici de manière à entrer le plus vite possible dans la zone de sécurité basse Z_{safe,L} (ce chemin est donc, là encore, celui pour lequel le système de stockage 2 est le moins sollicité).

Sur la figure 17, on a représenté le chemin de simulation Ch'_{S1}, Ch'_{S2} pour deux puissances à tester différentes, correspondant à deux points de départ P'si et P'_{S2}, dans un cas où la zone de sécurité basse Z_{safe,L} débute dès le pas de temps tᵢ₊₁. Pour la puissance correspondant au point de départ P'si, situé au-dessus de la zone de sécurité (correspondant à une puissance supérieure à P_{prod,min,H}), le chemin le plus court pour rejoindre la zone de sécurité, Ch'_{S1}, est un chemin rectiligne dont la pente est la pente minimale autorisée, Sₘᵢₙ. Pour la puissance correspondant à l'autre point de départ P'_{S2}, située en dessous de la zone de sécurité basse, le chemin le plus court pour rejoindre la zone de sécurité, Ch'_{S2}, est un chemin rectiligne, de pente égale à la pente maximale autorisée, Sₘₐₓ. Un troisième point P's, correspondant à une puissance déjà située dans la zone de sécurité, est également représenté sur cette figure. Pour ce troisième point, aucun chemin de simulation n'est déterminé. En effet, pour la puissance correspondant à ce point, il n'est pas nécessaire d'exécuter l'étape suivante de validation S'_{T1}. En effet, il n'est alors pas nécessaire de tester si l'ensemble de production pourra atteindre la zone de sécurité, puisqu'il y est déjà.

Sur la figure 18, on a représenté le chemin de simulation Ch'_{S3}, Ch'_{S4} pour deux puissances à tester différentes, correspondant à deux points de départ P'_{S3} et P'_{S4}, dans un cas où la zone de sécurité basse Z_{safe,L} débute à une date to postérieure au le pas de temps tᵢ₊₁.

Sur cette figure, on a également représenté une zone de proximité Z. Comme précédemment, cette zone de proximité correspond à l'ensemble des puissances, qui, pour le pas de temps tᵢ₊₁, permettent de rejoindre le premier point Po de la zone de sécurité basse P_{safe,L} avec une pente comprise entre la pente minimale autorisée Sₘᵢₙ et la pente maximale autorisée Sₘₐₓ.

Le point de départ P'_{S3} est situé au-dessus de cette zone de proximité Z. Le chemin de simulation correspondant, Ch'_{S3}, est donc un segment rectiligne, de pente Sₘᵢₙ, reliant le point P'_{S3} à la zone de sécurité basse Z_{safe,L}.

L'autre point de départ représenté à titre d'exemple sur cette figure, P'_{S4}, est situé dans la zone de proximité Z. Pour ce point de départ, le chemin de simulation est un segment rectiligne qui relie le point P'_{S4} au premier point Po de la zone de sécurité.

En alternative (comme pour le cas sans prise en compte de la modulation), le chemin de simulation déterminé à l'étape S'_{T,0}, pourrait être déterminé comme expliqué ci-dessous, dans les cas où la zone de sécurité basse débute à partir d'une date to ultérieure au pas de temps tᵢ₊₁.

Si la puissance à tester est située hors de la zone de proximité Z, au-dessus de cette zone, alors le chemin de simulation est un chemin rectiligne, dont la pente est la pente minimale autorisée Sₘᵢₙ (cas du chemin de simulation Ch'_{S3}, sur la figure 18).

Si la puissance à tester est située hors de la zone de proximité Z, au-dessous de cette zone, alors le chemin de simulation est un chemin rectiligne, dont la pente est la pente maximale autorisée Sₘₐₓ.

Et si la puissance à tester est située dans la zone de proximité Z, alors, le chemin de simulation comprend une première partie rectiligne, de pente Sₘₐₓ, puis une deuxième partie rectiligne, de pente Sₘᵢₙ, aboutissant au premier point Po de la zone de sécurité basse (cas du chemin de simulation Ch'ss, sur la figure 19).

Pour ce qui est maintenant de l'étape de simulation, S'_{T,1}, elle est réalisée de la même manière que dans le cas « sans modulation » décrit plus haut, mais en tenant compte de la possibilité de moduler la puissance produite attendue.

On notera d'ailleurs que, dans ce cas aussi (où l'on tient compte des possibilités de modulation du système de production 1), le critère testé lors de l'étape de validation S'_{T} est le critère bas mentionné plus haut, à savoir : l'ensemble de production pourra-t-il atteindre progressivement, avec une pente modérée, une puissance minimale prévue, grâce à l'énergie stockée dans le système de stockage au pas de temps considéré.

Mais comme on tient compte ici des possibilités de modulation du système de production 1, la puissance minimale prévue, dont on cherche à savoir si elle pourra être rejointe progressivement par l'ensemble de production, peut être l'une quelconque des puissance minimales prévues modulées, comprise entre la puissance minimale prévue modulée à la baisse P_{prod,min,L}, et la puissance minimale prévue modulée à la hausse Pp_{rod,min,H}.

L'étape S4, de détermination de la puissance minimale acceptable P_{L}, est déterminée de manière complètement analogue (symétrique) de ce qui a été présenté ci-dessus pour l'étape S3, mais sur la base des puissances maximales prévues, modulées à la hausse, et la baisse, P_{prod,max,H}, P_{prod,max,L}, au lieu d'être réalisée sur la base des puissances minimales prévues, modulées à la hausse et à la baisse.

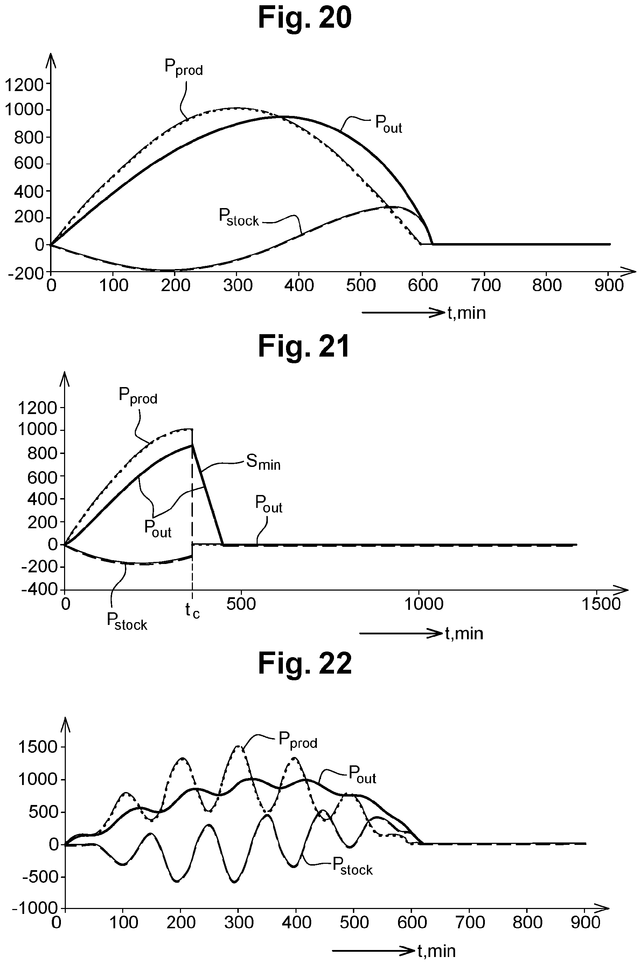

Les figures 20 à 22 montrent des résultats de simulations de pilotage d'un ensemble de production d'électricité, réalisées conformément au procédé qui vient d'être décrit, dans un cas où le système de production n'est pas pilotable (pas modulable).

Sur chacune de ces figures, on a représenté, en fonction du temps t exprimé en minutes :
- la puissance produite Pprod, délivrée par l'ensemble de production 1,
- la puissance de stockage P_{stock} fourni par le système de stockage 2 (négative dans le cas d'une charge, et positive lorsque le système de stockage débite), et
- la puissance délivrée Pₒᵤₜ, fournie finalement au réseau de distribution d'électricité.

Chacune de ces simulations s'étend sur une durée totale d'une demi-journée environ (et durant la journée).

La figure 20 correspond à une journée ensoleillée, sans passage de nuages, au cours la laquelle la puissance produite P_{prod} (générée par les panneaux photovoltaïques) varie progressivement, en augmentant, jusqu'au milieu de journée, puis en diminuant.

La figure 21 correspond à une journée ensoleillée, mais au cours de laquelle le ciel se couvre de nuages, brutalement de durablement (à partir d'un instant t_{C}).

La figure 22 correspond à une journée ensoleillée, mais avec plusieurs passages temporaires de nuages masquant partiellement la lumière solaire, ce qui cause une variation de la puissance produite P_{prod} ayant la forme d'une ondulation (dont la période vaut environ une heure et demie) qui se superpose à la variation progressive, journalière, de la puissance produite.

Comme on peut le voir sur les figures 21 et 22, le procédé de pilotage qui est mis en œuvre ici permet effectivement de réguler et de lisser efficacement les fluctuations de la puissance produite Prod, y compris à long terme (sur une durée de plusieurs heures), et même en cas de perturbation météorologique à la fois soudaine et durable (cas de la figure 21).

Dans le cas de la figure 21, la puissance produite P_{prod} chute complètement, et dévient nulle à partir de l'instant tc. Mais, avant cette date, l'ensemble de production 10 a été piloté, conformément au procédé décrit plus haut, de manière à délivrer une puissance Pₒᵤₜ inférieure à ce qui aurait pu être délivré vu la puissance produite P_{prod}, légèrement modérée à la baisse, justement de manière à pouvoir décroitre jusqu'à une puissance nulle *avec une pente modérée*, en cas de chute de la puissance produite. Grâce à cette disposition, qui constitue une sorte de précaution dans le pilotage de l'ensemble de production, la puissance délivrée Pₒᵤₜ évolue effectivement avec un taux de variation qui reste modéré, même lorsqu'une perturbation météorologique soudaine et durable se produit, comme dans le cas de la figure 21.

On constate par ailleurs sur l'exemple de la figure 22 que ce procédé de pilotage permet aussi d'atténuer efficacement des variations temporaires, ayant une durée typique de l'ordre d'une heure, de grande amplitude (amplitude de variation de presque 100%). Là encore, ce lissage très efficace s'explique notamment par le fait que, dans ce procédé, on tient compte des variations météorologiques les plus fortes supposées pouvoir se produire (autrement dit, on anticipe le fait que de telles variations peuvent advenir).

Et comme on peut le voir sur la figure 20, piloter ainsi l'ensemble de production, en tenant compte du fait que les variations météorologiques peuvent se dégrader, ne réduit en fait pas les performances de pilotage dans une situation favorable sans perturbation météorologique comme celle de la figure 20 (cela décale juste l'instant pour lequel Pₒᵤₜ est maximale, par rapport à l'instant pour lequel P_{prod} est maximale), ce qui montre que l'emploi de ce procédé de pilotage est vraiment particulièrement intéressant en pratique.

On notera que, dans le procédé de pilotage qui a été décrit plus haut, on détermine une *enveloppe* dans laquelle choisir la puissance cible Pc à laquelle commander l'ensemble de production (enveloppe qui est délimitée par les puissances minimale et maximale acceptables P_{L} et P_{H}). Mais une certaine latitude de réglage existe, au sein de cette enveloppe, et l'on peut prévoir, dans certaines phases de fonctionnement, d'ajuster la puissance cible Pc, entre les deux bornes P_{L} et P_{H}, en favorisant plus ou moins fortement le stockage d'énergie, par rapport à l'injection d'électricité sur le réseau de distribution. Ainsi, à titre d'exemple, en début de journée, pendant une certaine durée à partir du moment où le soleil se lève (moment qui correspond approximativement à t=0, sur les figures 20 à 22), cet arbitrage entre stockage et injection peut être réalisé de manière à maximiser le stockage (pour cela, la puissance cible Pc est choisie plutôt basse, dans l'intervalle de puissances acceptables qui s'étend de P_{L} à P_{H}), afin de recharger les batteries électriques (en grande partie déchargées au cours de la nuit) pour disposer ensuite d'une réserve d'énergie utile pour le lissage de la puissance électrique délivrée.

Différentes variantes peuvent être apportées au procédé qui vient d'être décrit, en plus de celles déjà mentionnées plus haut. Par exemple, au lieu de déterminer la puissance maximale acceptable, et la puissance minimale acceptable, on pourrait déterminer seulement la puissance maximale acceptable (ou inversement), la puissance cible, à délivrer au pas de temps suivant, étant alors choisie inférieure à la puissance maximale acceptable (respectivement, supérieure à la puissance minimale acceptable).

Par ailleurs, la simulation réalisée lors de l'étape de validation pourrait être réalisée de manière plus simple, en considérant que les puissances maximales de charge et de décharge ont des valeurs fixes.

Les opérations réalisées au cours des différentes étapes présentées ci-dessus pourraient être organisées (regroupées) en étapes d'une manière différente de ce qui a été présenté ci-dessus.

On notera également que le procédé de pilotage qui vient d'être décrit peut être employé non seulement pour piloter un ensemble de production d'électricité réel, matériel, mais aussi pour piloter un ensemble de production d'électricité simulé, dans le cadre d'un procédé de dimensionnement d'un ensemble de production. En effet, le choix de la capacité de stockage à installer dans un tel ensemble est important en pratique, et a des conséquence matérielles et écologiques importantes. Comme déjà indiqué, un système de stockage surdimensionné (capacité de stockage totale excessive) représente une dépense inutile et un impact écologique fort. Mais un système de stockage sous-dimensionné ne permettra pas un lissage suffisant de la puissance délivrée par l'ensemble de production. On peut donc prévoir, pour déterminer au mieux la capacité de stockage à installer, de simuler le fonctionnement de l'ensemble de production sur une durée importante (par exemple une semaine, ou un mois), pour vérifier qu'une capacité de stockage donnée est suffisante. Et, lors de cette simulation, le pilotage de l'ensemble de production simulé (fictif) sera réalisé conformément au procédé de pilotage décrit plus haut, qui, comme indiqué plus haut, permet un pilotage optimal, et sollicitant au minimum le système de stockage. Baser le procédé de dimensionnement sur ce procédé de pilotage permettra donc d'estimer au plus juste la capacité de stockage à installer (en évitant un couteux surdimensionnement).

## Revendications

1. Procédé de pilotage d'un ensemble de production (10) d'électricité qui délivre une puissance délivrée (Pₒᵤₜ) à un réseau de distribution (20) d'électricité, l'ensemble de production (10) d'électricité comprenant au moins :
- un système de production (1) d'électricité qui génère une puissance produite (P_{prod}) dépendant de conditions météorologiques environnantes, pour lequel il est estimé que la puissance produite (P_{prod}) est au moins égale à une puissance minimale prévue (P_{prod,min}, P_{prod,min,H}, P_{prod,min,L}) même en cas de fluctuation à la baisse due à des variations de conditions météorologiques, et
- un système de stockage (2) d'énergie électrique, dans lequel une énergie stockée (E_{stock}), disponible, est emmagasinée,
le procédé comprenant les étapes suivantes, exécutées à nouveau à chaque pas de temps (ti) par un dispositif de pilotage (3) comprenant au moins un processeur (30) et une mémoire (31) :
- (S3) détermination d'une puissance maximale acceptable (P_{H}) pour le pas de temps suivant (tᵢ₊₁),
- (S5) détermination d'une puissance cible (Pc) pour l'ensemble de production (10), la puissance cible étant déterminée de manière à être inférieure à la puissance maximale acceptable (P_{H}),
- (S6) pilotage de l'ensemble de production (10) de sorte que la puissance délivrée (Pₒᵤₜ) au pas de temps suivant (tᵢ₊₁) soit égale à la puissance cible (Pc),
l'étape (S3) de détermination de la puissance maximale acceptable (P_{H}) comprenant une étape de validation (S_{T} ; S'_{T}), au cours de laquelle il est testé si la puissance maximale acceptable (P_{H}) satisfait le critère suivant :
- si l'ensemble de production (10) délivre ladite puissance maximale acceptable (P_{H}) au pas de temps suivant (tᵢ₊₁), et si la puissance produite (P_{prod}), générée par le système de production (1), devient égale à ladite puissance minimale prévue (P_{prod,min}, P_{prod,min,H}, P_{prod,min,L}) à partir du pas de temps suivant (tᵢ₊₁),
- alors, compte tenu de l'énergie stockée (E_{stock}) dans le système de stockage (2) au pas de temps (ti) considéré, l'ensemble de production (10) pourra délivrer ultérieurement une puissance délivrée (Pₒᵤₜ) qui, au cours du temps (t), rejoint progressivement ladite puissance minimale prévue (P_{prod,min}, P_{prod,min,H}, P_{prod,min,L}), tout en variant avec une pente qui reste comprise entre une pente minimale autorisée (Sₘᵢₙ) et une pente maximale autorisée (Smax),
l'étape de validation (S_{T} ; S'_{T}) comprenant une détermination par simulation numérique de la puissance (Pₒᵤₜ) qui serait délivrée ultérieurement, au cours du temps (t), par l'ensemble de production (10), ladite simulation comprenant une détermination d'une puissance de stockage (P_{stock}) délivrée par le système de stockage (2) au cours du temps (t), la puissance de stockage (P_{stock}) étant déterminée sur la base d'un modèle de comportement électrique ou énergétique du système de stockage (2).

2. Procédé selon la revendication précédente,
- comprenant en outre une étape (S2) de détermination d'un intervalle (I_{P,E}) de puissances délivrées, envisageables pour l'ensemble de production (10) au pas de temps suivant (tᵢ₊₁), ledit intervalle s'étendant d'une puissance envisageable minimale (P_{E,min}) à une puissance envisageable maximale (P_{E,max}),
- la pente entre la puissance envisageable minimale (P_{E,min}), au pas de temps suivant (tᵢ₊₁), et la puissance délivrée (Pₒᵤₜ), effectivement générée au pas de temps (tᵢ) considéré, étant égale à ladite pente minimale autorisée (Sₘᵢₙ),
- la pente entre la puissance envisageable maximale (P_{E,max}), au pas de temps suivant (tᵢ₊₁), et la puissance délivrée (Pₒᵤₜ), effectivement générée au pas de temps (tᵢ) considéré, étant égale à ladite pente maximale autorisée (Sₘₐₓ),
- et dans lequel la puissance maximale acceptable (P_{H}) est déterminée en cherchant, dans ledit intervalle (I_{P,E}), la plus grande puissance électrique satisfaisant ledit critère.

3. Procédé selon l'une quelconque des revendications précédentes, comprenant en outre une acquisition d'une puissance demandée (P_{dem}), à fournir au réseau de distribution (20) d'électricité, et dans lequel la puissance cible (Pc) est déterminée (S5) de manière à être aussi proche que possible de la puissance demandée (P_{dem}), tout en étant inférieure ou égale à ladite puissance maximale acceptable (P_{H}).

4. Procédé selon la revendication 2 ou selon les revendications 2 et 3, dans lequel :
- il est estimé que la puissance produite (P_{prod}) par le système de production (1) est au plus égale à une puissance maximale prévue P_{prod,max}, P_{prod,max,H}, P_{prod}, _{max,L}) même en cas de fluctuation à la hausse due à des variations de conditions météorologiques,
- une énergie électrique, qui peut encore être reçue et stockée dans le système de stockage (2) compte tenu de l'énergie stockée (E_{stock}) déjà emmagasinée dans le système de stockage (2) et compte tenu de sa capacité totale de stockage, est représentée par une marge de stockage d'énergie,
- le procédé comprenant en outre une l'étape (S4) de détermination d'une puissance minimale acceptable (P_{L}), au cours de laquelle il est testé si la puissance minimale acceptable (P_{L}) satisfait le critère supplémentaire suivant :
o si l'ensemble de production (10) délivre ladite puissance minimale acceptable (P_{L}) au pas de temps suivant (tᵢ₊₁), et si la puissance produite (P_{prod}) par le système de production (1) devient égale à ladite puissance maximale prévue (P_{prod,max}, P_{prod,max,H}, P_{prod,max,L}) à partir du pas de temps suivant (tᵢ₊₁),
o alors, compte tenu de la marge de stockage du système de stockage (2) au pas de temps (ti) considéré, l'ensemble de production (10) pourra délivrer ultérieurement une puissance délivrée (Pₒᵤₜ) qui, au cours du temps, rejoint progressivement ladite puissance maximale prévue (P_{prod,max}, P_{prod,max,H}, P_{prod,max,L}), tout en variant avec une pente qui reste comprise entre la pente minimale autorisée et la pente maximale autorisée,
- la puissance minimale acceptable (P_{L}) étant déterminée en cherchant, dans ledit intervalle (I_{P,E}) de puissances délivrées envisageables pour l'ensemble de production (10) au pas de temps suivant (tᵢ₊₁), la plus petite puissance électrique satisfaisant ledit critère supplémentaire,
- et dans lequel la puissance cible (Pc) est déterminée (S5) de manière à être supérieure à ladite puissance minimale acceptable (P_{L}).

5. Procédé selon l'une quelconque des revendications précédentes dans lequel, au cours de l'étape de validation (S_{T} ; S'_{T}), ladite simulation numérique (S_{T,1} ; S'_{T,1}) est réalisée en tenant compte d'une puissance maximale de décharge pouvant être fournie par le système de stockage (2) lors d'une décharge, et en tenant compte d'une puissance maximale de charge pouvant être acceptée par le système de stockage (2) lors d'une charge, la puissance maximale de décharge et la puissance maximale de charge étant déterminées en tenant compte de énergie stockée (E_{stock}) dans le système de stockage (2), sur la base du modèle de fonctionnement du système de stockage.

6. Procédé selon l'une quelconque des revendications précédentes, au cours duquel la puissance minimale prévue (P_{prod,min}) est déterminée (S30) comme suit :
- la puissance minimale prévue (P_{prod,min}) est égale, au pas de temps (ti) considéré, à la puissance produite (P_{prod}), effectivement générée par le système de production (1) au pas de temps considéré,
- la puissance minimale prévue (P_{prod,min}) décroit ensuite linéairement au cours du temps (t) avec une pente égale à une pente maximale de variation à la baisse (S_{fluct,min}), attendue, en moyenne, pour le système de production, en cas de fluctuation soudaine des conditions météorologiques, puis,
- dès que la puissance minimale prévue (P_{prod,min}) rejoint une prévision basse de puissance moyenne (P_{moy,min}), la puissance minimale prévue est égale à ladite prévision basse de puissance moyenne (P_{moy,min}), la prévision basse de puissance moyenne (P_{moy,min}) étant représentative de la plus petite puissance produite attendue, pour des conditions météorologiques moyennes, les moins favorables en termes de production.

7. Procédé selon l'une quelconque des revendications précédentes,
- comprenant une détermination (S31) d'une courbe de sécurité (P_{safe,L}), la courbe de sécurité étant constituée, dans un plan de simulation dont l'abscisse est le temps (t) et dont l'ordonnée est une puissance électrique (P_{prod,min}), par la partie de la courbe représentative de la puissance minimale prévue (P_{prod,min}) pour laquelle la pente est, à chaque instant, comprise entre la pente minimale autorisée (Sₘᵢₙ) et la pente maximale autorisée (Sₘₐₓ),
- comprenant une détermination (S_{T,0}) d'un chemin de simulation (Ch_{H}), le chemin de simulation étant le chemin qui, dans le plan de simulation :
o relie un point de départ, dont les coordonnées sont le pas de temps suivant (tᵢ₊₁) et la puissance maximale acceptable (P_{H}), à ladite courbe de sécurité (P_{safe,L}),
∘ a une pente comprise entre la pente minimale autorisée (Sₘᵢₙ) et la pente maximale autorisée (Sₘₐₓ),
∘ et qui, dans le plan de simulation, a la longueur la plus courte compte tenu des deux contraintes précédentes,
- et dans lequel ledit critère est testé en réalisant une simulation numérique (S_{T1}) de l'évolution de la puissance délivrée par l'ensemble de production d'électricité (10), au cours de laquelle il est testé si l'ensemble de production (10) peut atteindre ladite courbe de sécurité (P_{safe,L}) en suivant ledit chemin de simulation (Ch_{H}), compte tenu de l'énergie stockée (E_{stock}), présente dans le système stockage au pas de temps (tᵢ) considéré.

8. Procédé selon l'une des revendications précédentes, dans lequel :
- le système de production (1) est pilotable, la puissance produite (P_{prod}) pouvant être ajustée, pour des conditions météorologiques données, entre une puissance modulée à la baisse (P_{prod,L}) et une puissance modulée à la hausse (P_{prod,H}), et dans lequel,
- lors de l'étape (S6) de pilotage de l'ensemble de production (10), le système de production (1) est piloté de manière à ce que la puissance produite (P_{prod}) ait la plus grande valeur possible, compatible avec le fait que la puissance délivrée (Pₒᵤₜ) par l'ensemble de production (10) doit atteindre ladite puissance cible (Pc) au pas de temps suivant (tᵢ₊₁).

9. Procédé selon l'une des revendications précédentes, dans lequel :
- le système de production (1) est pilotable, la puissance produite (P_{prod}) pouvant être ajustée, pour des conditions météorologiques données, entre une puissance modulée à la baisse (P_{prod,L}) et une puissance modulée à la hausse (P_{prod,H}), et dans lequel
- lors de l'étape de validation (S'_{T}), ledit critère est testé en tenant compte des possibilités de modulation de la puissance produite (P_{prod}), générée par le système de production (1).

10. Dispositif de pilotage (3) pour un ensemble de production (10) d'électricité, l'ensemble de production (10) d'électricité délivrant une puissance délivrée (Pₒᵤₜ) à un réseau de distribution (20) d'électricité, l'ensemble de production (10) d'électricité comprenant au moins au moins :
- un système de production (1) d'électricité qui génère une puissance produite (P_{prod}) dépendant de conditions météorologiques environnantes, pour lequel il est estimé que la puissance produite (P_{prod}) est au moins égale à une puissance minimale prévue (P_{prod,min}, P_{prod,min,H}, P_{prod,min,L}) même en cas de fluctuation à la baisse due à des variations de conditions météorologiques, et
- un système de stockage (2) d'énergie électrique, dans lequel une énergie stockée (E_{stock}), disponible, est emmagasinée,
le dispositif de pilotage (3) comprenant au moins un processeur (30), une mémoire (31), et un module communication (32) avec les systèmes de production (1) et de stockage (2), le dispositif de pilotage (3) étant programmé pour piloter l'ensemble de production (10) d'électricité en exécutant les étapes suivantes, exécutées à nouveau à chaque pas de temps(tᵢ) :
- (S3) détermination d'une puissance maximale acceptable (P_{H}) pour le pas de temps suivant (tᵢ₊₁),
- (S5) détermination d'une puissance cible (Pc) pour l'ensemble de production (10), la puissance cible étant déterminée de manière à être inférieure à la puissance maximale acceptable (P_{H}),
- (S6) pilotage de l'ensemble de production (10) de sorte que la puissance délivrée (Pₒᵤₜ) au pas de temps suivant (tᵢ₊₁) soit égale à la puissance cible (Pc),
l'étape (S3) de détermination de la puissance maximale acceptable (P_{H}) comprenant une étape de validation (S_{T} ; S'_{T}), au cours de laquelle il est testé si la puissance maximale acceptable (P_{H}) satisfait le critère suivant :
- si l'ensemble de production (10) délivre ladite puissance maximale acceptable (P_{H}) au pas de temps suivant (tᵢ₊₁), et si la puissance produite (P_{prod}), générée par le système de production (1), devient égale à ladite puissance minimale prévue (P_{prod,min}, _{Pprod,min,H}, P_{prod,min,L}) à partir du pas de temps suivant (tᵢ₊₁),
- alors, compte tenu de l'énergie stockée (E_{stock}) dans le système de stockage au pas de temps (ti) considéré, l'ensemble de production (10) pourra délivrer ultérieurement une puissance délivrée (Pₒᵤₜ) qui, au cours du temps (t), rejoint progressivement ladite puissance minimale prévue (P_{prod,min}, P_{prod,min,H}, P_{prod,min,L}), tout en variant avec une pente qui reste comprise entre une pente minimale autorisée (Sₘᵢₙ) et une pente maximale autorisée (Sₘₐₓ),
l'étape de validation (S_{T} ; S'_{T}) comprenant une détermination par simulation numérique de la puissance (Pₒᵤₜ) qui serait délivrée ultérieurement, au cours du temps (t), par l'ensemble de production (10), ladite simulation comprenant une détermination d'une puissance de stockage (P_{stock}) délivrée par le système de stockage (2) au cours du temps (t), la puissance de stockage (P_{stock}) étant déterminée sur la base d'un modèle de comportement électrique ou énergétique du système de stockage (2).

11. Ensemble de production (10) d'électricité, délivrant une puissance délivrée (Pₒᵤₜ) à un réseau de distribution (20) d'électricité, l'ensemble de production (10) d'électricité comprenant au moins :
- un système de production (1) d'électricité qui génère une puissance produite (P_{prod}) dépendant de conditions météorologiques environnantes, pour lequel il est estimé que la puissance produite (P_{prod}) est au moins égale à une puissance minimale prévue (P_{prod,min}, P_{prod,min,H}, P_{prod,min,L}) même en cas de fluctuation à la baisse due à des variations de conditions météorologiques, et
- un système de stockage (2) d'énergie électrique, dans lequel une énergie stockée (E_{stock}), disponible, est emmagasinée,
l'ensemble de production (10) d'électricité comprenant en outre le dispositif de pilotage (3) de la revendication précédente.
